# EUROPÄISCHE PATENTSCHRIFT

(11) **EP 3 313 647 B1**
(45) Veröffentlichungstag und Bekanntmachung des Hinweises auf die Patenterteilung: **06.05.2020**
(21) Anmeldenummer: 16733448.1
(22) Anmeldetag: 27.06.2016
(51) Int. Cl.: B29C 51/02, B29C 64/106, B33Y 10/00, B33Y 80/00, B29C 51/08, B29C 51/10

(54) **VERFAHREN ZUR HERSTELLUNG VON 3D OBJEKTEN**
METHOD FOR THE PREPARATION OF 3D OBJECTS
PROCÉDÉ DE FABRICATION D'OBJETS 3D

(30) Priorität: 29.06.2015 EP 15174313
(43) Veröffentlichungstag der Anmeldung: 02.05.2018
(73) Patentinhaber: Covestro Deutschland AG, 51373 Leverkusen (DE)
(72) Erfinder: BÜSGEN, Thomas, 51063 Köln (DE); ACHTEN, Dirk, 51375 Leverkusen (DE); DEGIORGIO, Nicolas, 47807 Krefeld (DE); WAGNER, Roland, 51375 Leverkusen (DE); MICHAELIS, Thomas, 51375 Leverkusen (DE); BEENEN-FUCHS, Maria, Elisabeth, 50769 Köln (DE)
(74) Vertreter: Levpat
(86) Internationale Anmeldenummer: PCT/EP2016/064821
(87) Internationale Veröffentlichungsnummer: WO 2017/001325

(56) Entgegenhaltungen:
- US-A1- 2006 053 526
- KRUTH ET AL: "Progress in Additive Manufacturing and Rapid Prototyping", CIRP ANNALS, ELSEVIER BV, NL, CH, FR, Bd. 47, Nr. 2, 1. Januar 1998 (1998-01-01) , Seiten 525-540, XP022146131, ISSN: 0007-8506, DOI: 10.1016/S0007-8506(07)63240-5
- ZHENZHEN QUAN ET AL: "Additive manufacturing of multi-directional preforms for composites: opportunities and challenges", MATERIALS TODAY, 23. Mai 2015 (2015-05-23), Seiten 1-10, XP055210471, ISSN: 1369-7021, DOI: 10.1016/j.mattod.2015.05.001

## Beschreibung

Die Erfindung betrifft insbesondere ein Verfahren zur Fertigung dreidimensionaler Körper aus Polymeren mit einem E-Modul von ≥ 500 MPa wobei flächige Kunststoffbauteile, die mit gängigen Rapid-Prototyping-Verfahren (additive Fertigung) hergestellt werden, anschließend zu dreidimensionalen Objekten wärmeverformt bzw. tiefgezogen werden. Derartige flächige Kunststoffbauteile können beispielsweise in der Herstellung von Handyhüllen, Gehäusen z. B. von Elektroartikeln, die ein 3D-Relief aufweisen, Verpackungen oder Möbel mit Oberflächenstrukturen, A, B oder C-Säule, ein Dachmodul oder ein Armaturenbrett eines Automobils, eine Sitzschale, einen Filterkorb, Medizinprodukte wie steife Korsette, Orthesen, Protektoren, Dämpfungselemente oder Leichtbaustrukturen mit Gerüststruktur etc. verwendet werden.

Schichtweise aufgebaute Bauteile und Verfahren zu deren Herstellung sind unter dem Begriff der Additiven Fertigung oder generativen Fertigungsverfahren (auch Rapid Prototyping, Rapid Manufacturing, Rapid Tooling, Additive Manufacturing genannt) bekannt. Beispiele für derartige Verfahren sind das selektive Lasersintern oder das dreidimensionale Drucken wie es beispielsweise in der WO 00/26026, der DE 10 2004 014 806, der DE 102007009277, der WO/2014/015037, der WO 2014/100462 oder der EP 293 00 09 sowie in KRUTH ET AL: "Progress in Additive Manufacturing and Rapid Prototyping", CIRP ANNALS, ELSEVIER BV, NL, CH, FR, Bd. 47, Nr. 2, 1. Januar 1998 (1998-01-01), Seiten 525-540, XP022146131 beschrieben ist.

Weitere generative Verfahren und Vorrichtungen zur Herstellung 3-dimensionaler Bauteile sind beispielsweise aus der EP 0429 196 A2, DE 92 18 423 U1, DE 195 15 165 C2 oder der DE 101 27 383 bekannt.

Bekannt zur Herstellung starrer, dreidimensionaler Körper sind z.B. Spritzgussverfahren, Tiefziehen und Thermoformen von flachen Folien, Blasformen von Vorformlingen oder Fräsen aus Blöcken.

Es ist eine Aufgabe der Erfindung die Nachteile des Standes der Technik wenigstens zu einem Teil zu überwinden.

Es ist weiterhin eine Aufgabe der Erfindung ein neues, schnelleres und vereinfachtes Verfahren zur Herstellung dreidimensionaler Objekte wie z. B. Objekten mit großer Oberfläche, hoher Stabilität und geringer Dicke, wie z. B. ein Korsett, bereit zu stellen.

### Detaillierte Beschreibung

Der Erfindung liegt die Erkenntnis zu Grunde, dass sich mittels topologischer Methoden viele Bauteile mit einer großer Oberfläche und geringen Dicke der Außenwände mathematisch in eine durchgehende, flächige, "zweidimensionale" Form umwandeln lassen. Die Topologie eines dreidimensionalen Objektes lässt sich durch Formen der zweidimensionalen Form mit jeweils individuell angepasster Struktur in einfacher Weise herstellen.

Ein erster Aspekt bezieht sich auf ein erfindungsgemäßes Verfahren zur Herstellung eines dreidimensionalen Objektes, dessen Außenfläche wenigstens einen Flächenabschnitt umfasst, der erzeugt wird, indem mittels eines additiven Fertigungsverfahrens (schichtaufbauendes Formgebungsverfahren) auf einer planen Basisplatte zunächst ein Flächenabschnitt in zweidimensionaler Form produziert wird, umfassend die folgenden Schritte:
I) Auftragen wenigstens eines aushärtbaren Polymers oder aushärtbaren Reaktionsharzes in fließfähiger Form als Materialbahnen auf eine plane Basisplatte mittels eines schichtaufbauenden Formgebungsverfahrens zur Erstellung einer ersten Schicht;
II) Auftragen einer zweiten Schicht auf die erste Schicht erstellt mittels eines schichtaufbauenden Formgebungsverfahrens, bevorzugt mittels des gleichen schichtaufbauenden Formgebungsverfahrens wie in Schritt I);
III) optional Auftragen von 1 bis 198 weiteren Schichten erstellt gemäß Schritt II) wobei jeweils eine neue Schicht auf die jeweils vorherige Schicht aufgetragen wird;
IV) Aushärten der Schichten;
V) Ablösen des ausgehärteten Flächenabschnitt von der planen Basisplatte; und
VI) Formen des ausgehärteten Flächenabschnitts in ein dreidimensionales Objekt mittels Tiefziehen oder Thermoformen;
wobei mindestens eine Schicht durch Auftragen wenigstens eines aushärtbaren Polymers oder aushärtbaren Reaktionsharzes mit einem Elastizitätsmodul (E-Modul) im gehärteten Zustand von ≥ 500 MPa gemäß EN ISO 527-1 (letzte Ausgabe vom April 1996, aktuelle ISO-Version Februar 2012) in fließfähiger Form als Materialbahnen auf den jeweiligen Untergrund erstellt wird.

Eine Ausführungsform bezieht sich auf ein erfindungsgemäßes Verfahren zur Herstellung eines dreidimensionalen Objektes, dessen Außenfläche wenigstens einen Flächenabschnitt umfasst, der erzeugt wird, indem mittels eines additiven Fertigungsverfahrens (schichtaufbauendes Formgebungsverfahren) auf einer planen Basisplatte zunächst ein Flächenabschnitt in zweidimensionaler Form produziert wird, umfassend die folgenden Schritte:
I) Auftragen wenigstens eines aushärtbaren Polymers oder aushärtbaren Reaktionsharzes mit jeweils einem Elastizitätsmodul (E-Modul) im gehärteten Zustand von ≥ 500 MPa gemäß EN ISO 527-1 (letzte Ausgabe vom April 1996, aktuelle ISO-Version Februar 2012) in fließfähiger Form als Materialbahnen auf eine plane Basisplatte mittels eines schichtaufbauenden Formgebungsverfahrens zur Erstellung einer ersten Schicht;
II) Auftragen einer zweiten Schicht auf die erste Schicht mittels eines schichtaufbauenden Formgebungsverfahrens, bevorzugt mittels des gleichen schichtaufbauenden Formgebungsverfahrens wie in Schritt I);
III) optional Auftragen von 1 bis 198 weiteren Schichten gemäß Schritt II) wobei jeweils eine neue Schicht auf die jeweils vorherige Schicht aufgetragen wird;
IV) Aushärten der Schichten;
V) Ablösen des ausgehärteten Flächenabschnitt von der planen Basisplatte; und
VI) Formen des ausgehärteten Flächenabschnitts in ein dreidimensionales Objekt mittels Tiefziehen oder Thermoformen.

Ein zweiter Aspekt bezieht sich auf ein erfindungsgemäßes Verfahren zur Herstellung eines dreidimensionalen Objektes, dessen Außenfläche wenigstens einen Flächenabschnitt umfasst, der erzeugt wird, indem mittels eines additiven Fertigungsverfahrens (schichtaufbauendes Formgebungsverfahren) auf einer planen Basisplatte zunächst ein Flächenabschnitt in zweidimensionaler Form produziert wird, umfassend die folgenden Schritte:
i) Auftragen wenigstens eines aushärtbaren Polymers oder aushärtbaren Reaktionsharzes mit jeweils einem E-Modul im gehärteten Zustand von ≥ 500 MPa gemäß EN ISO 527-1 (letzte Ausgabe vom April 1996, aktuelle ISO-Version Februar 2012) in fließfähiger Form als Materialbahnen auf eine plane Basisplatte, mittels eines schichtaufbauenden Formgebungsverfahrens zur Erstellung einer Schicht wobei die Schicht eine zusammenhängende Fläche mit oder ohne Aussparungen (z. B. wabenförmig) darstellt;
ii) Aushärten der Schicht;
iii) Ablösen des ausgehärteten Flächenabschnitt von der planen Basisplatte; und
iv) Formen des ausgehärteten Flächenabschnitts in ein dreidimensionales Objekt mittels Tiefziehen oder Thermoformen.

Eine bevorzugte Ausführungsform beider Aspekte und deren bevorzugten Ausführungsformen bezieht sich auf ein erfindungsgemäßes Verfahren, wobei das schichtaufbauende Formgebungsverfahren Schmelzschichtung (Fused Filament Fabrication (FFF)), Ink-Jet-Printing oder Photopolymer-Jetting ist.

Eine weitere bevorzugte Ausführungsform des ersten Aspekts und dessen bevorzugten Ausführungsformen bezieht sich auf ein Verfahren, wobei das schichtaufbauende Formgebungsverfahren in Schritt I) Schmelzschichtung (Fused Filament Fabrication (FFF)), Ink-Jet-Printing oder Photopolymer-Jetting ist.

Eine weitere bevorzugte Ausführungsform des zweiten Aspekts und dessen bevorzugten Ausführungsformen bezieht sich auf ein Verfahren, wobei das schichtaufbauende Formgebungsverfahren in Schritt i) Schmelzschichtung (Fused Filament Fabrication (FFF)), Ink-Jet-Printing oder Photopolymer-Jetting ist.

Eine weitere bevorzugte Ausführungsform des ersten Aspekts und dessen bevorzugten Ausführungsformen bezieht sich auf ein Verfahren, wobei das schichtaufbauende Formgebungsverfahren in Schritt I) und II) und III) jeweils das gleiche ist und ausgewählt ist aus der Gruppe bestehend aus Schmelzschichtung (Fused Filament Fabrication (FFF)), Ink-Jet-Printing und Photopolymer-Jetting.

Eine weitere bevorzugte Ausführungsform beider Aspekte und deren bevorzugten Ausführungsformen bezieht sich auf Verfahren, wobei die Austrittstemperatur der Stoffmischungen aus der Düse in den Schritten I) bis III) im Bereich von 80 °C bis 420 °C liegt.

Eine weitere bevorzugte Ausführungsform beider Aspekte und deren bevorzugten Ausführungsformen bezieht sich auf Verfahren, wobei die Basisplatte beheizt ist und die Heiztemperatur der Basisplatte in einem Bereich von 20 °C bis 250 °C liegt.

Eine weitere bevorzugte Ausführungsform beider Aspekte und deren bevorzugten Ausführungsformen bezieht sich auf Verfahren, wobei ein aushärtbares Polymer oder aushärtbaren Reaktionsharz mit einem Elastizitätsmodul (E-Modul) im gehärteten Zustand von ≥ 500 MPa ausgewählt ist aus einer Gruppe bestehend aus thermoplastischem Polyurethan (TPU), Polycarbonat (PC), Polyamid (PA), Polyethylentherephtalat (PET), Polybutylentherephthalat (PBT), Cycloolefinische Copolyester (COC), Polyetheretherketon (PEEK), Polyetheramidketon (PEAK), Polyetherimid (PEI) (z.B. Ultem), Polyimid (PI), Polypropylen (PP) oder Polyethylen (PE), Acrylnitril-Butadien-Styrol (ABS), Polylactat (PLA), Polymethylmethacrylat (PMMA), Polystyrol (PS), Polyvinylchlorid (PVC), Polyoxymethylen (POM), Polyacrylnitril (PAN), Polyacrylat, Zelluloid bevorzugt ausgewählt aus einer Gruppe bestehend aus TPU, PA, PEI, und PC, besonders bevorzugt au seiner Gruppe ausgewählt aus TPU und PC.

Eine weitere bevorzugte Ausführungsform beider Aspekte und deren bevorzugten Ausführungsformen bezieht sich auf Verfahren, wobei in allen Schichten dasselbe aushärtbare Polymer oder aushärtbare Reaktionsharz verwendet wird.

Eine weitere bevorzugte Ausführungsform des ersten Aspektes und dessen bevorzugte Ausführungsformen bezieht sich auf Verfahren, wobei mindestens eine Schicht ein anderes aushärtbares Polymer oder aushärtbares Reaktionsharz umfasst.

Eine weitere bevorzugte Ausführungsform beider Aspekte und deren bevorzugten Ausführungsformen bezieht sich auf Verfahren, wobei in allen Schichten ein aushärtbares Polymer oder aushärtbares Reaktionsharz mit jeweils einem Elastizitätsmodul (E-Modul) im gehärteten Zustand von ≥ 500 MPa verwendet wird.

Eine weitere bevorzugte Ausführungsform des ersten Aspektes und dessen bevorzugte Ausführungsformen bezieht sich auf Verfahren, wobei in mindestens einer Schicht ein aushärtbares Polymer oder aushärtbares Reaktionsharz mit jeweils einem Elastizitätsmodul (E-Modul) im gehärteten Zustand von < 500 MPa verwendet wird.

Eine weitere bevorzugte Ausführungsform des ersten Aspektes und dessen bevorzugte Ausführungsformen bezieht sich auf Verfahren, wobei in der ersten Schicht ein aushärtbares Polymer oder aushärtbares Reaktionsharz mit jeweils einem Elastizitätsmodul (E-Modul) im gehärteten Zustand von < 500 MPa verwendet wird.

Eine weitere bevorzugte Ausführungsform des ersten Aspektes und dessen bevorzugte Ausführungsformen bezieht sich auf Verfahren, wobei in der letzten Schicht ein aushärtbares Polymer oder aushärtbares Reaktionsharz mit jeweils einem Elastizitätsmodul (E-Modul) im gehärteten Zustand von < 500 MPa verwendet wird.

Eine weitere bevorzugte Ausführungsform beider Aspekte und deren bevorzugten Ausführungsformen bezieht sich auf Verfahren, wobei mindestens ein aushärtbares Polymer oder aushärtbares Reaktionsharz zum Auftragen einer Schicht in Form einer fließfähigen und aushärtbaren Stoffmischung verwendet wird.

Eine weitere bevorzugte Ausführungsform beider Aspekte und deren bevorzugten Ausführungsformen bezieht sich auf Verfahren, wobei mindestens ein aushärtbares Polymer oder aushärtbares Reaktionsharz zum Auftragen einer Schicht in Form mindestens zweier verschiedener fließfähigen und aushärtbaren Stoffmischungen verwendet wird.

Eine weitere bevorzugte Ausführungsform beider Aspekte und deren bevorzugten Ausführungsformen bezieht sich auf Verfahren, wobei die Aushärtung durch Abkühlen von Thermoplasten, durch Kalt-oder Heißpolymerisation, Polyaddition, Polykondensation, Addition oder Kondensation oder durch elektro-magnetische Strahlungen initiierte Polymerisation erfolgt.

Eine weitere bevorzugte Ausführungsform beider Aspekte und deren bevorzugten Ausführungsformen bezieht sich auf Verfahren, wobei die Aushärtung durch eine unmittelbar an einer Spritzdüse (3) nachgeführten UV- oder IR-Lichtquelle durchgeführt wird.

Eine weitere bevorzugte Ausführungsform beider Aspekte und deren bevorzugten Ausführungsformen bezieht sich auf Verfahren, wobei das dreidimensionale Objekt eine Handyhülle, ein Gehäuse z. B. von einem Elektroartikel, das ein 3D-Relief aufweist, eine Verpackung oder ein Möbelstück mit Oberflächenstrukturen, eine A, B oder C-Säule, ein Dachmodul oder ein Armaturenbrett eines Automobils, eine Sitzschale, ein Filterkorb, ein Medizinprodukte wie ein steifes Korsette oder eine Orthese, ein Protektor, ein Dämpfungselement oder eine Leichtbaustruktur mit Gerüststruktur ist.

Eine bevorzugte Ausführungsform des ersten Aspektes und dessen bevorzugte Ausführungsformen bezieht sich auf ein Verfahren, wobei mehrere der einzelnen Materialbahnen in lateraler Richtung oder der Auftragungsorientierung der Materialbahnen der ersten Lage mit unterschiedlicher Dicke abgelegt werden.

Eine weitere bevorzugte Ausführungsform der beiden Aspekte und deren bevorzugte Ausführungsformen bezieht sich auf ein Verfahren wobei mindestens ein aushärtbares Polymer oder aushärtbares Reaktionsharz zum Auftragen einer Schicht in Form einer fließfähigen und aushärtbaren Stoffmischung verwendet wird bzw. wobei mindestens ein aushärtbares Polymer oder aushärtbares Reaktionsharz zum Auftragen einer Schicht in Form mindestens zweier verschiedener fließfähigen und aushärtbaren Stoffmischung(en) verwendet wird, wobei die Stoffmischungen mindestens einen Füllstoff ausgewählt aus der Gruppe bestehend aus Verstärkungsfasern ausgewählt aus Polyamidfasern, Glasfasern, Kohlenstofffasern oder Aramidfasern oder Verstärkungspartikel, ausgewählt aus anorganischen oder keramischen Nanopulvern, Metallpulvern oder Kunststoffpulvern oder Ruß und organische und anorganische Pigmente enthalten.

Eine weitere bevorzugte Ausführungsform des ersten Aspektes oder einer seiner weiteren bevorzugten Ausführungsformen bezieht sich auf ein Verfahren, wobei eine Materialbahn einer Schicht bei Auftragung von Materialbahnen einer neuen Schicht auf diese Schicht nur teilverfestigt ist und die endgültige Verfestigung erst zusammen mit der Verfestigung der darüber abgelegten Materialbahn(en) erfolgt.

Ein weiterer Aspekt betrifft ein Verfahren zur Herstellung eines Protektors angepasst an einen Nutzer umfassend die Schritte:
a) Bestimmen der relevanten Körperregiongeometriedaten des Benutzers;
b) Umrechnen der 3D-Körpergeometriedaten zur Erstellung eines Flächenabschnitts gemäß Schritten I) bis V) oder i) bis iii) gemäß einem Verfahren des Aspekts eins oder zwei;
c) Anfertigen eines dreidimensionalen Objektes gemäß einem Verfahren nach einem der Ansprüche 1 bis 13, wobei Schritt VI) bzw. Schritt iv) die dreidimensionale Formgebung durch Tiefziehen oder Thermoformen gemäß den Körperrregiongeometriedaten des Benutzers aus Schritt a) erfolgt.

Der Begriff Körperregiongeometriedaten und 3D-Körpergeometriedaten wird synonym verwendet.

Ein weiterer Aspekt betrifft einen Protektor erhältlich nach einem erfindungsgemäßen Verfahren.

Der unbestimmte Ausdruck "ein" steht im Allgemeinen für "wenigstens ein" im Sinne von "ein oder mehr". Der Fachmann versteht je nach Situation, dass nicht der unbestimmte Artikel sondern der bestimmte Artikel "ein" im Sinne von "1" gemeint sein muss bzw. der unbestimmte Artikel "ein" auch in einer Ausführungsform den bestimmten Artikel "ein" (1) mit umfasst.

Alle hierin beschriebenen bevorzugten Ausführungsformen eines erfindungsgemäßen Verfahrens oder durch ein erfindungsgemäßes Verfahren hergestelltes Produkt sind miteinander kombinierbar, solange sie nicht geltenden Naturgesetzten widersprechen.

### 3D- Druckverfahren

Der Begriff "additive Fertigung" ist dem Fachmann bekannt und ist der Überbegriff über verschiedene Verfahren zur schnellen Herstellung von Musterbauteilen ausgehend von Konstruktionsdaten.

Der Begriff "schichtaufbauendes Formgebungsverfahren mittels fließfähige/ fließfähiger und aushärtbarer Stoffmischungen", wie hierin verwendet, bezieht sich bevorzugt auf FFF, es kann sich jedoch auch auf jedes andere bekannte 3D-Druckverfahren mittels fließfähiger und aushärtbarer Stoffmischungen beziehen wie z. B. Photopolymer-Jetting (http://www.custompartnet.com/wu/jettedphotopolymer; Stand 08.04.2015) oder Ink-Jet-Printing Verfahren (http://www.custompartnet.com/wu/ink-jet-printing; Stand 08.04.2015).

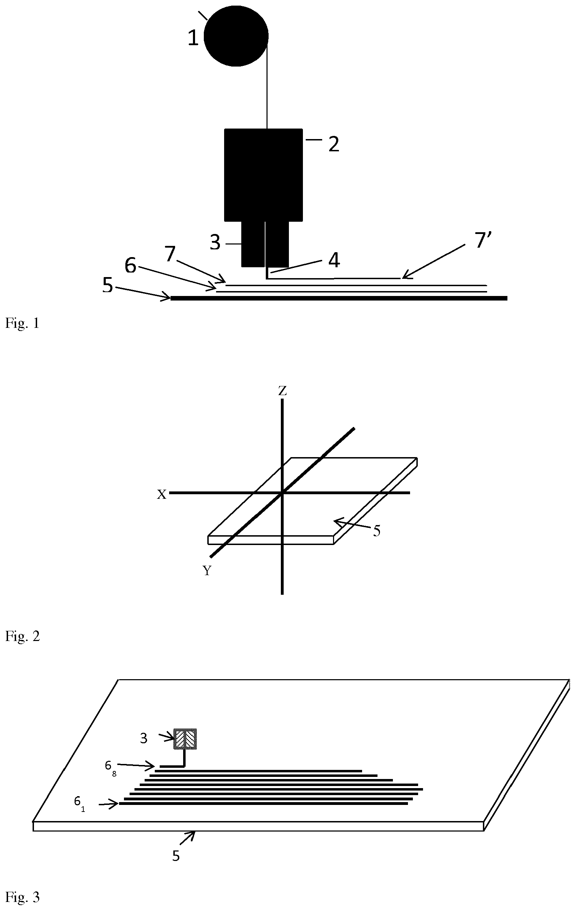

Der Begriff "Fused Filament Fabrication" (FFF; deutsch: Schmelzschichtung, manchmal auch Plastic Jet Printing (PJP) genannt), wie hierin verwendet, bezeichnet ein Fertigungsverfahren aus dem Bereich der additiven Fertigung, mit dem ein Werkstück schichtweise aus einem schmelzfähigen Kunststoff aufgebaut wird. Ein schematischer Aufbau für ein FFF-Verfahren ist in Fig. 1 gezeigt. Der Kunststoff kann mit oder ohne weitere Zusätze wie Fasern eingesetzt werden. Maschinen für das FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 60 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm. Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht.

Die Düse ist dabei bevorzugt so ausgestaltet, dass Materialmengen entweder kontinuierlich abgegeben werden können oder in Tropfenform. Bevorzugt werden die Materialmengen in Tropfenform abgegeben.

In dem vorliegenden erfindungsgemäßen Verfahren wird die Düse bevorzugt bei dem 3D-Druckverfahren in einem Abstand über die plane Basisplatte (wenn die erste Schicht aufgetragen wird) bzw. über bereits aufgetragene Schichten gefahren, der dem 0,3-fachen bis 1-fachen bevorzugt dem 0,3-fachen bis 0,9-fachen wie z. B. dem 0,3-fachen bis 0,8-fachen, 0,4-fachen bis 0,8-fachen oder 0,5-fachen bis 0,8-fachen, bezogen auf den Durchmesser des aufzutragenden Materialfadens (Düsenauslassdurchmesser) entspricht. Diese Korrelation zwischen Untergrundabstand der Düse (Untergrund ist entweder die plane Basisplatte oder eine bereits aufgetragene Schicht) und Düsenauslassdurchmesser sorgt dafür, dass das Material mit einem gewissen Andruck auf den Untergrund gepresst wird und so eine bessere Haftung zwischen den Schichten des entstehenden Flächenabschnitts erzeugt wird.

Die Stoffmischungen, die in dem erfindungsgemäßen Verfahren eingesetzt werden, werden kurz vor der Düse oder in der Düse auf mindestens 75 °C erhitzt und dabei fließbar gemacht. Der Fachmann kennt die Temperaturbereiche zum Fließbarmachen bekannter amorpher Polymere/Thermoplasten. Bevorzugt liegt die Aufheiztemperatur der verflüssigten Stoffmischungen, die auch die Austrittstemperatur der Stoffmischungen aus der Düse darstellt, im Bereich von 80 °C bis 420 °C, bevorzugt von 120 °C bis 400 °C (wie z. B. von 160°C bis 400 °C), mehr bevorzugt im Bereich von 180 °C bis 360 °C.

Eine verflüssigte Stoffmischung wird in einem erfindungsgemäßen Verfahren durch die Düse als Materialbahnen zur Erstellung einer ersten Schicht, die aus einzelnen, parallel zueinander verlaufenden Materialbahnen besteht; zu einer zusammenhängenden Fläche aus miteinander verbundenen Materialbahnen besteht; oder aus durch Materialbahnen gebildeten wabenförmig oder anderen geometrischen Figuren besteht; auf die plane Basisplatte aufgetragen. Eine Materialbahn kann dabei entweder aus einem durchgehenden Materialfaden bestehen, oder aus mehreren Materialfäden (z. B. einzelne Tropfen), die auf der Arbeitsebene so nebeneinander aufgetragen werden, dass sie ineinander fließen und so eine durchgehende Materialbahn bilden. Dabei ist die Viskosität der Stoffmischung nach Verlassen der Düse als Materialbahn derart hoch, dass ein völliges Zerlaufen der entstehenden Bahn nicht stattfindet.

Wie bereits an anderer Stelle beschrieben, ist es bevorzugt, dass die Materialbahn in Form von Tropfen auf die Basisplatte oder eine zuvor aufgebrachte Schicht aufgebracht wird. Insbesondere geeignete Verfahren zum Auftragen des Polymers oder Reaktionsharzes sind das Jetted- Photopolymer oder Ink-Jet-Printing. Die Tropfen können dabei so dicht nebeneinander abgelegt werden, dass hieraus eine geschlossene Struktur geformt werden kann, wie beispielsweise eine wabenförmige oder andere geometrische Figuren.

Dem Fachmann ist bekannt, welche Viskositäten/Bahndurchmesser bei einem Verfahren wie FFF, Jetted-Photopolymerauf oder Ink-Jet-Printing vorliegen müssen.

Durch das Verhältnis Abstand Düse zu Untergrund und Fadendurchmesser (proportional zum Düsenauslassdurchmesser und Vorschubgeschwindigkeit des Materials) kann durch das Abflachen (und damit Verbreitern) des aus der Düse austretenden Materialstroms (ein durchgehender Materialfaden oder mehrere, die Düse nacheinander verlassenden, Materialfäden, die dann ineinanderfließen) so entweder durch das Auftragen der Materialbahnen eine durchgehende Fläche entstehen oder Materialbahnen, die durch freie Flächen voneinander getrennt sind. Besteht die erste Schicht aus sich lateral nicht berührenden Materialbahnen und wird auf die erste Schicht im folgenden Schritt eine zweite Schicht auf die erste Schicht, so muss es Kontaktpunkte (z. B. Kreuzpunkte) bzw. Kontaktflächen zwischen den beiden Flächen geben um ein Zusammenhaften der beiden Schichten zu gewährleisten. In diesem Fall wird in einem erfindungsgemäßen Verfahren die Fläche einer ersten Schicht durch die auf die erste Schicht aufgetragene zweite Schicht definiert. In einem Fall, in dem eine erste Schicht in Form zueinander paralleler Materialbahnen, und eine zweite Schicht auf die erste Schicht aufgetragen wurde, beträgt der Wert des Winkels der Auftragungsorientierung (Betrag der Auftragungsrichtung) der Materialbahnen der zweiten Schicht entweder ≠ 0° bezogen auf die Auftragungsorientierung der Materialbahnen der ersten Schicht (wodurch durch die beiden Schichten Poren gebildet werden können), oder die Auftragungsorientierung der Materialbahnen der zweiten Schicht ist identisch mit der Auftragungsorientierung der Materialbahnen der ersten Schicht, jedoch sind die Materialbahnen der zweiten Schicht um ca. einen halben Abstand, bevorzugt einen halben Abstand, bezogen auf den Abstand zwischen den Materialbahnenmittelpunkten benachbarter Materialbahnen der ersten Schicht versetzt. Dabei muss jede Bahn der zweiten Schicht mindestens so breit sein, dass sie die jeweils unter ihr liegenden zwei Bahnen der ersten Schicht berührt. Das Versetzen der Materialbahnen sorgt durch das Verbinden der beiden Schichten miteinander für eine durchgehende Verbindung (keine Porenbildung).

Eine bevorzugte Ausführungsform der vorliegenden Erfindung bezieht sich auf ein Verfahren bzw. auf ein mit einem erfindungsgemäßen Verfahren hergestelltes dreidimensionales Objekt wobei mindestens zwei Schichten zusammen Poren bilden wobei die durch diese mindestens zwei Schichten gebildete Poren eine Größe vom 0,3-fachen bis zum 1000-fachen der maximalen Bahndicke zweier die Pore bildenden Schichten aufweisen. In einer bevorzugten Ausführungsform beträgt die Größe einer Pore das 0,3-fache bis 5-fache der maximalen Bahndicke zweier die Pore bildenden Schichten.

Z. B. kann in einem erfindungsgemäßen Verfahren der Abstand der Düse z. B. bei einem FFF-Verfahren, vom Untergrund (plane Basisplatte, Zwischenlage oder zuvor gedruckte Schicht) und der Abstand der Materialbahnen voneinander bei der Bildung einer (neuen) Schicht derart gewählt, dass es zu keiner Flächenbildung bei der Bildung einer (neuen) Schicht kommt sondern sich alle Schichten des Flächenabschnitts aus parallelen Materialbahnen zusammensetzten. Der Winkel der Auftragungsorientierung der Materialbahnen, die eine Schicht bilden ist dabei bei zwei aufeinanderfolgenden Schichten ≠ 0° bezogen auf die Auftragungsorientierung der ersten der beiden Schichten. Bevorzugt liegt der Winkel der Auftragungsorientierung bei mindestens zwei aufeinanderfolgenden Schichten im Bereich von 30° bis 150°, wie etwa im Bereich von 45° bis 135° oder im Bereich von 60° bis 120° oder im Bereich von 85° bis 95° oder 90°. Der Fachmann versteht, dass es zu Schwankungen von bis zu ± 5° bei der Auftragsrichtung der Materialbahnen einer zweiten Schicht auf eine erste Schicht kommen kann, da durch die zueinander parallelen Materialbahnen der Untergrundschicht die Oberfläche des Untergrundes für die zweite Schicht naturgegeben lokal uneben ist.

### Plane Basisplatte

Plane Basisplatten für additive Fertigungsverfahren sind dem Fachmann bekannt. Eine plane Basisplatte kann mittels konventionellen oder generativen Technik hergestellt, z. B. kann eine Basisplatte gefräst werden und bietet die Vorteile der Einhaltung von Maß- und Formgenauigkeit sowie einer sehr guten Oberflächenqualität. Es stehen viele verschiedene Materialien für das Fräsen zur Verfügung, wie beispielsweise Ureol, Holz oder Aluminium. Für bestimmte Geometrie kann es sinnvoll sein, die Abformgrundlage generativ herzustellen, zum Beispiel mittels Lasersintern.

Eine plane Basisplatte dient der Flächenformgebung des Flächenabschnitts, der in einem erfindungsgemäßen Verfahren hergestellt wird. Entsprechend kann eine erste Schicht in einem erfindungsgemäßen Verfahren direkt auf eine plane Basisplatte aufgetragen werden oder es kann eine Zwischenlage wie ein Textil oder eine Folie, die die flächige Form der planen Basisplatte an die erste Schicht eines erfindungsgemäßen Verfahren weitergibt, vorliegen, auf der die erste Schicht aufgetragen wird und mit der sich die Materialbahnen der ersten Schicht verbinden, so dass diese Zwischenlage Teil des Flächenabschnitts und damit auch Teil des dreidimensionalen Objektes wird.

Die Oberfläche der planen Basisplatte besteht bevorzugt aus Glas, Carbon, Polypropylen, Edelstahl oder einer mit Teflon, Polyimid, etc. beschichteten Oberfläche oder aber wird gezielt mit einer haftenden Primer Schicht versehen, die ein Anhaften der zu druckenden Objekte auf der Oberfläche begünstigt, dadurch ein Verziehen der gewünschten zu druckenden Objekte minimiert. Die Haftschicht ist dabei typischerweise eine niedrigschmelzende Verbindung die eventuell in einem geeigneten Lösungsmittel vorgelöst werden kann. Verschiedenste Haftvermittler sind dem Fachmann bekannt.

Bei einer "planen Basisplatte" im Sinne der vorliegenden Erfindung handelt es sich um eine in der Arbeitsebene essentiell plane Unterlage auf der die erste Schicht eines Flächenabschnitts in einem erfindungsgemäßen Herstellungsprozess aufgetragen wird. Essentiell plan bedeutet, dass eine Unterlage in einer XY-Ebene eines kartesischen Koordinatensystems mit drei Achsen X, Y und Z aufgespannt ist (Z wäre dann = 0) und keine bzw. materialbedingt nur geringe Abweichungen auf der Z-Achse aufweist (siehe z. B. Fig. 2). Die Abweichungen in Z-Richtung für eine Ebene, die in XY-Richtung definiert wurde, liegen bevorzugt bei maximal 3 mm mehr bevorzugt bei maximal 1 mm, noch mehr bevorzugt jedoch sind die Abweichungen in Z-Richtung der Oberfläche maximal das 2-fache der maximalen Schichtauftragsdicke einer ersten Schicht (jedoch maximal 3 mm, bevorzugt maximal 1 mm), besonders bevorzugt sind die Abweichungen in Z-Richtung der Oberfläche kleiner als die maximale Schichtauftragsdicke einer ersten Schicht, wobei die plane Basisplatte in ihren orthogonalen Ausdehnungen in einer gedachten XY-Ebene jeweils mindestens um einen Faktor 5, besser um einen Faktor 10, bevorzugt um einen Faktor 50, mehr bevorzugt um einen Faktor 100 größer ist als die maximale Abweichung in der Z-Ebene. Beispielhaft besitzt bei einem Höhenunterschied von 2 mm eine runde, plane Basisplatte einen Durchmesser von mindestens 1 cm, einen Durchmesser von mindestens 2 cm, einen Durchmesser von mindestens 10 cm oder einen Durchmesser von mindestens 20 cm; handelt es sich um eine quadratische, plane Basisplatte so besitzen die Kanten, die die Basisplatte bilden jeweils mindestens eine Länge von 1 cm, 2 cm, 10 cm oder 20 cm.

Die Form einer planen Basisplatte ist irrelevant solange die Basisplatte eine plane Fläche aufweist, die als Untergrund für eine erste Schicht eines Flächenabschnitts dient und in all ihren X- und Y-Ausrichtungen größer ist als oder gleich groß wie die Fläche der ersten Schicht eines zweidimensionalen Flächenabschnitts gemäß der vorliegenden Erfindung. Die Form der Basisplatte kann symmetrisch z. B: rund, rechteckig, quadratisch etc. oder asymmetrisch sein.

In einer bevorzugten Ausführungsform ist die plane Basisplatte beheizbar, um eine vorzeitige Aushärtung des Materials durch temperaturbedingtes Erstarren der ersten Schicht hinauszuzögern. Die Heiztemperatur der Basisplatte liegt bevorzugt in einem Bereich von 20 °C bis 250 °C wie z. B. von 30 °C bis 250 °C oder wie etwa in einem Bereich von 40 °C bis 200 °C wie von 60 °C bis 200 °C oder von 60 °C bis 150 °C. Die Aufwärmtemperatur der planen Basisplatte sollte jedoch nicht größer als die in einem erfindungsgemäßen Verfahren für eine zum fließfähig machen der fließfähigen und aushärtbaren Stoffmischung verwendete Düsenaustrittstemperatur sein. Bevorzugt liegt die Aufwärmtemperatur mindestens 10 °C unter der Düsenaustrittstemperatur.

Die Beheizung der planen Basisplatte wird bevorzugt zumindest so lange durchgeführt, bis nach Abschluss der Auftragung der ersten Schicht des Flächenabschnitts mindestens eine zweite Schicht auf die erste Schicht aufgetragen wurde.

### Stoffmischungen

Ein aushärtbares Polymer oder aushärtbares Reaktivharz im Sinn der vorliegenden Erfindung kann alleine oder in Form von "fließfähige und aushärtbare Stoffmischungen" in einem erfindungsgemäßen Verfahren eingesetzt werden. Der Begriff "fließfähige und aushärtbare Stoffmischungen" bezieht sich entsprechend auf eine Stoffmischung umfassend mindestens ein aushärtbares Polymer oder mindestens ein aushärtbares Reaktionsharz - bevorzugt ein Thermoplast - und mindestens einen Zusatzstoff wie z. B. Fasern, UV-Härter, Peroxide, Diazoverbindungen, Schwefel, Stabilisatoren, anorganische Füllstoffe, Weichmacher, Flammschutzmittel und Anti-Oxidantien. Insbesondere bei Reaktionsharzen können Mischungen von zwei oder mehr Reaktionsharzen vorab gemischt sein oder werden auf dem Substrat vermischt. Der Auftrag kann im letzteren Fall beispielsweise aus unterschiedlichen Düsen erfolgen. Die fließfähigen und aushärtbaren Stoffmischungen können unterschiedlicher Natur sein, müssen jedoch unter den Bedingungen des erfindungsgemäßen Verfahrens flüssige beziehungsweise zähflüssige extrudierbare oder flüssige verdruckbare Kunststoffmassen sein. Dabei kann es sich um Thermoplasten, Silikone, unvulkanisiertes Gummi oder auch um aushärtbare Reaktionsharze (bevorzugtes Produkt ausgehärteter Reaktionsharze ist ein Thermoplast) handeln.

Thermoplasten können z. B. thermoplastisches Polyurethan (TPU), Polycarbonat (PC), Polyamid (PA), Polyethylentherephtalat (PET), Polybutylentherephthalat (PBT), Cycloolefinische Copolyester (COC), Polyetheretherketon (PEEK), Polyetheramidketon (PEAK), Polyetherimid (PEI) (z.B. Ultem), Polyimid (PI), Polypropylen (PP) oder Polyethylen (PE), Acrylnitril-Butadien-Styrol (ABS), Polylactat (PLA), Polymethylmethacrylat (PMMA), Polystyrol (PS), Polyvinylchlorid (PVC), Polyoxymethylen (POM), Polyacrylnitril (PAN), Polyacrylat, Zelluloid bevorzugt ausgewählt aus einer Gruppe bestehend aus TPU, PA, PEI, und PC, besonders bevorzugt au seiner Gruppe ausgewählt aus TPU und PC sein.

Die fließfähigen und aushärtbaren Stoffmischungen bzw. aushärtbaren Polymere oder aushärtbaren Reaktivharze in einem erfindungsgemäßen Verfahren können Polymere und/oder polymerisierbare Oligomere bzw. Monomere mit oder ohne Zusatzstoffe wie z. B. Polyamid, Polyethylentherephthalat (PET), Polybutylentherephthalat (PBT), Kevlar-, Glas-, Aramid- oder Kohle-Fasern Rayon, Celluloseacetat, und/oder gängige Naturfasern (z. B. Flachs, Hanf, Cocos, etc.) sein. Neben oder anstatt von Fasern können die Stoffmischungen auch Verstärkungspartikel, insbesondere ausgewählt aus anorganischen oder keramischen Nanopulvern, Metallpulvern oder Kunststoffpulvern, beispielsweise aus SiO₂ oder Al₂O₃, AlOH₃, Ruß, TiO₂ oder CaCO₃ enthalten. Weiterhin können Stoffmischungen z. B. Peroxide, Diazoverbindungen und/oder Schwefel enthalten.

Bevorzugte aushärtbare Polymer oder aushärtbare Reaktivharze oder fließfähige und aushärtbare Stoffmischungen umfassend ein aushärtbares Polymer oder aushärtbares Reaktivharz, die in einem erfindungsgemäßen Verfahren eingesetzt werden, bestehen aus/umfassen thermoplastische Polymere oder Reaktivharze, die zu einem Thermoplasten reagieren.

Insbesondere bevorzugt sind Stoffmischungen in einem erfindungsgemäßen Verfahren umfassend/bestehend aus thermoplastischem Polyurethan (TPU), Polycarbonat (PC), Polyamid (PA), Polyethylentherephtalat (PET), Polybutylentherephthalat (PBT), Cycloolefinische Copolyester (COC), Polyetheretherketon (PEEK), Polyetheramidketon (PEAK), Polyetherimid (PEI) (z.B. Ultem), Polyimid (PI), Polypropylen (PP) oder Polyethylen (PE), Acrylnitril-Butadien-Styrol (ABS), Polylactat (PLA), Polymethylmethacrylat (PMMA), Polystyrol (PS), Polyvinylchlorid (PVC), Polyoxymethylen (POM), Polyacrylnitril (PAN), Polyacrylat, Zelluloid sein. Besonders bevorzugt sind Stoffmischungen umfassend/bestehend aus TPU, PA, PEI, oder PC, ganz besonders bevorzugt sind Stoffmischungen umfassend/bestehend aus TPU oder PC.

In einer besonders bevorzugten Ausführungsform werden in einem erfindungsgemäßen Verfahren TPU, PC, PA, PVC, PET, PBT, COC, PEEK, PEAK, PEI, PP, PE, PAN, ABS, PLA, PMMA, PS PVC, POM, PAN, Polyacrylat oder Zelluloid (bevorzugt TPU, PC, PA oder PEI, besonders bevorzugt TPU oder PC) als Filamente, Pellets oder Pulver als fließfähige und aushärtbare Stoffmischungen oder aushärtbare Polymere eingesetzt. In einer weiteren bevorzugten Ausführungsform enthalten derartige fließfähige und aushärtbare Stoffmischungen aus TPU, PC, PA, PVC, PET, PBT, COC, PEEK, PEAK, PEI, PP, PE, PAN, ABS, PLA, PMMA, PS PVC, POM, PAN, Polyacrylat oder Zelluloid (bevorzugt TPU, PC, PA oder PEI, besonders bevorzugt TPU oder PC) zusätzlich Fasern (z. B. Glasfasern) und/oder Verstärkungspartikel, wobei sowohl Kurzfasern < 2 mm und Langfasern > 2 mm möglich sind. Auch können "Endlosfasern" verwendet werden, die über die gesamte Länge einer aufgetragenen Materialbahn gehen. Die Anwesenheit von Fasern führt bei der Extrusion der fließfähigen und aushärtbaren Stoffmischung in einem erfindungsgemäßen Verfahren zu einer anisotropen Verstärkung der sich bildenden Linien aus der fließfähigen und aushärtbaren Stoffmischung, ohne dabei die Biegefähigkeit in Längsrichtung der Materialbahnen nennenswert zu beeinflussen. Fasermengen werden bevorzugt mit bis zu 40 Gew.% bezogen auf den extrudierten Kunststoff zugegeben. Geeignete Fasern können beispielsweise Glasfäden, Quarzfäden, Kohlefasern oder andere anorganische Fasern sein oder Kunststofffasern mit einem E-Modul ≥ 1 GPa, wie beispielsweise Kevlar- oder Aramidfasern Typischerweise vergrößert sich der E-Modul mit Zugabe der Fasern um einen Faktor > 1,5 besonders bevorzugt > 2.

In einer weiteren bevorzugten Ausführungsform werden in einem erfindungsgemäßen Verfahren aushärtbare Reaktionsharze eingesetzt oder fließfähige und aushärtbare Stoffmischungen umfassend aushärtbare Reaktionsharze eingesetzt, die z.B. UV aktiviert aushärten oder eine chemische Reaktion untereinander oder der Luft eingehen. Beispiele hierfür sind Zweikomponentenpolyurethane (2K PU), Zweikomponentepoxide (2K EP) lufthärtende oder radikalisch härtende ungesättigte Polyester als auch alle dem Fachmann bekannten UV-härtenden Reaktivharze auf Basis von z.B. Vinyl- und Acrylverbindungen und auch Kombinationen verschiedener Härtungsmechanismen.

E-Modul-Angaben zu Polymeren und Reaktivharzen wie hierin verwendet beziehen sich, wenn nicht explizit anders angegeben, auf den E-Modul der Polymere bzw. Reaktivharze im kristallinen (ausgehärtetem) Zustand und nicht auf den E-Modul eines Polymers oder Reaktivharz unter Extrusionsbedingungen einer fließfähigen und aushärtbaren Stoffmischung.

Der E-Modul wird vorliegend gemäß EN ISO 527-1 (letzte Ausgabe vom April 1996, aktuelle ISO-Version Februar 2012) bestimmt.

In einer weiteren bevorzugten Ausführungsform beträgt der E-Modul eines Polymers, bevorzugt eines thermoplastischen Polymers, zur Erstellung einer ersten Schicht in einem erfindungsgemäßen Verfahren ggf. in einer fließfähigen und aushärtbaren Stoffmischung (wie z. B. TPU, PC, PA oder PEI, insbesondere TPU oder PC, optional jeweils mit Fasern versetzt) gleich oder mehr als 500 Megapascal (MPa), bevorzugt ≥ als 1 GPa (Gigapascal); mehr bevorzugt einen E-Modul im Bereich von 500 MPa bis 50 GPa (z. B. einen E-Modul im Bereich von 1 GPa bis 50 GPa) noch mehr bevorzugt einen E-Modul im Bereich von 500 MPa bis 30 GPa (z. B. einen E-Modul im Bereich von 1 GPa bis 30 GPa, einen E-Modul im Bereich von 500 MPa bis 20 GPa oder einen E-Modul im Bereich von 1 GPa bis 10 GPa. Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Polymers beträgt dabei jedoch immer mindestens 500 MPa. Bevorzugt ist ein E-Modul nicht größer als 20 GPa um eine Extrudierung durch eine Düse oder ein Durchlauf durch einen Inkjet-Kopf ohne Probleme durchzuführen.

In einer bevorzugten Ausführungsform beträgt der E-Modul eines weiteren Kunststoffes zur Erstellung mindestens einer weiteren Schicht in einem erfindungsgemäßen Verfahren ggf. in einer fließ fähigen und aushärtbaren Stoffmischung (wie z. B. TPU, PA, PEI, oder PC, bevorzugt TPU oder PC, optional jeweils mit Fasern versetzt) mindestens 500 Megapascal (MPa), bevorzugt 800 MPa, mehr bevorzugt 1 GPa, noch mehr bevorzugt 1,5 GPa wie z. B. einen E-Modul im Bereich von 500 MPa bis 20 GPa oder einen E-Modul im Bereich von 800 MPa bis 10 GPa. Das E-Modul dieser (unter den Extrusionsverfahrensbedingungen) fließfähigen und aushärtbaren Stoffmischungen kann z. B. durch den Einsatz von Fasern höher liegen als das E-Modul des Kunststoffes, der E-Modul des eingesetzten Polymers beträgt dabei jedoch ebenfalls mindestens 500 MPa.

In einer weiteren bevorzugten Ausführungsform beträgt der E-Modul aller Kunststoffe zur Erstellung einer Schicht in einem erfindungsgemäßen Verfahren ggf. in einer fließfähigen und aushärtbaren Stoffmischung (wie z. B. TPU, PC, PA, PVC, PET, PBT, COC, PEEK, PEAK, PEI, PP, oder PE, PAN, ABS, PLA, PMMA, PS PVC, POM, PAN, Polyacrylat oder Zelluloid (bevorzugt TPU, PC, PA oder PEI, besonders bevorzugt TPU oder PC, optional jeweils mit Fasern versetzt) mindestens 500 Megapascal (MPa), bevorzugt 800 MPa, mehr bevorzugt 1,5 GPa wie z. B. einen E-Modul im Bereich von 500 MPa bis 20 GPa oder einen E-Modul im Bereich von 800 MPa bis 10 GPa. Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Polymers beträgt dabei jedoch ebenfalls mindestens 500 MPa.

In einer weiteren bevorzugten möglichen Ausführungsform wurden eine, zwei, drei, vier oder fünf oder mehr als fünf - bevorzugt jedoch nicht zwangsläufig zusammenhängenden - Schichten eines Flächenabschnitts bzw. eines dreidimensionalen Objektes aus aushärtbaren Polymeren oder aushärtbaren Reaktivharzen jeweils mit einem E-Modul weniger als 500 Megapascal (MPa) hergestellt. Die aushärtbaren Polymeren oder aushärtbaren Reaktivharze mit einem E-Modul weniger als 500 MPa können, alleine oder als Stoffmischungen umfassend diese aushärtbaren Polymere oder aushärtbaren Reaktivharze eingesetzt werden. Das E-Modul der genutzten aushärtbaren Polymere oder aushärtbaren Reaktivharze kann dabei z.B. weniger als 400 MPa, weniger als 250 MPa bevorzugt weniger als 200 MPa, mehr bevorzugt weniger als 150 MPa, noch mehr bevorzugt weniger als 100 MPa betragen, wie z. B. ein E-Modul im Bereich von 1 bis 100 MPa oder ein E-Modul im Bereich von 5 bis 50 MPa. In einer besonders bevorzugten Ausführungsform bestehen diese Schichten mit einem E-Modul von weniger als 500 MPa aus Thermoplasten wie z. B. Polyurethan (PU), Polyvinylchlorid (PVC), thermoplastischen Elastomeren (TPE) wie TPO (Thermoplastische Elastomere auf Olefinbasis, vorwiegend PP/EPDM, z. B. Santoprene (AES/Monsanto)), TPV (Vernetzte thermoplastische Elastomere auf Olefinbasis, vorwiegend PP/EPDM, z. B. Sarlink (DSM), Forprene (SoFter)), TPU (Thermoplastische Elastomere auf Urethanbasis (thermoplastische Polyurethane), z. B. Desmopan, Texin, Utechllan (Bayer)), TPC (Thermoplastische Polyesterelastomere / Thermoplastische Copolyester, z. B. Keyflex (LG Chem)), TPS( Styrol-Blockcopolymere (SBS, SEBS, SEPS, SEEPS und MBS), z. B. Styroflex (BASF), Septon (Kuraray), Thermolast (Kraiburg TPE) oder Saxomer (Polyplast Compound Werk GmbH), bevorzugt PE, PU oder TPE (insbesondere TPU oder TPV, optional jeweils mit Fasern versetzt). Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Polymers bzw. Reaktivharzes beträgt dabei jedoch jeweils weniger als 500 MPa.

In einer weiteren bevorzugten Ausführungsform beträgt der E-Modul eines Polymers, bevorzugt eines Reaktivharzes zur Erstellung einer ersten Schicht in einem erfindungsgemäßen Verfahren ggf. in einer fließ fähigen und aushärtbaren Stoffmischung (z. B. 2K PU, 2K EP, feuchtigkeitshärtende PU-Systeme, lufthärtende oder radikalisch härtende ungesättigte Polyester oder UV-härtenden Reaktivharze auf Basis von z.B. Vinyl- und Acrylverbindungen) mindestens 500 Megapascal (MPa), bevorzugt 800 MPa, mehr bevorzugt 1 GPa, noch mehr bevorzugt 1,5 GPa wie z. B. einen E-Modul im Bereich von 500 MPa bis 20 GPa oder einen E-Modul im Bereich von 800 MPa bis 10 GPa. Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Reaktivharze beträgt jedoch mindestens 500 MPa.

In einer bevorzugten Ausführungsform beträgt der E-Modul mindestens eines weiteren Kunststoffes zur Erstellung mindestens einer weiteren Schicht in einem erfindungsgemäßen Verfahren ggf. in einer fließ fähigen und aushärtbaren Stoffmischung (z. B. 2K PU, 2K Epoxide, feuchtigkeitshärtende PU-Systeme, lufthärtende oder radikalisch härtende ungesättigte Polyester oder UV-härtenden Reaktivharze auf Basis von z.B. Vinyl- und Acrylverbindungen) mindestens 500 Megapascal (MPa), bevorzugt 800 MPa, mehr bevorzugt 1 GPa, noch mehr bevorzugt 1,5 GPa wie z. B. einen E-Modul im Bereich von 500 bis 20 MPa oder einen E-Modul im Bereich von 800 bis 10 MPa. Das E-Modul dieser (unter den Extrusionsverfahrensbedingungen) fließfähigen und aushärtbaren Stoffmischungen kann z. B. durch den Einsatz von Fasern weiter erhöht sein, der E-Modul der in dieser Stoffmischung eingesetzten Polymere bzw. Reaktivharze beträgt jedoch jeweils mindestens 500 MPa.

In einer weiteren Ausführungsform beträgt der E-Modul eines weiteren Kunststoffes zur Erstellung mindestens einer weiteren Schicht in einer fließfähige und aushärtbare Stoffmischungen (wie z. B. TPU oder PC, optional kann die Stoffmischung jeweils mit Fasern versetzt) mehr als 500 Megapascal (MPa), wie z. B. mehr als 1 Gigapascal (GPa), wie z. B. in einem Bereich von 1 GPa bis 3 GPa, oder in einem Bereich von 1 GPa bis 2,5 GPa. Der E-Modul dieser (unter den Extrusionsverfahrensbedingungen) fließfähigen und aushärtbaren Stoffmischungen kann z. B. durch den Einsatz von Fasern nach Abkühlung / Aushärtung jedoch noch höher liegen. Ein E-Modul sollte jedoch nicht größer als 20 GPa sein, da ansonsten eine Extrudierung durch eine Düse oder ein Durchlauf durch einen Inkjet-Kopf nur noch sehr schwer durchführbar ist. In einer bevorzugten Ausführungsform besitzen solche Schichten aus Polymeren oder Reaktivharzen mit E-Modul-Werten über 500 MPa eine geringere flächige Ausdehnung als die Fläche der ersten Schicht, z. B. liegt die durch eine zweite oder folgende Schicht, die in einem erfindungsgemäßen Verfahren aufgetragen wird, gebildete flächenmäßige Ausbreitung in einem Bereich von 0,01 bis 99% wie etwa von 0,1 bis 95%, von 0,1 bis 90%, von 0,1 bis 80% bezogen auf die Fläche der ersten Schicht.

### Schichten

Zur Herstellung jeder Schicht gemäß einem erfindungsgemäßen additiven Fertigungsverfahren wird Material in Form von Materiabahnen gemäß geometrischen Daten Bahn für Bahn ablegt.

Das Material in Form von Materialbahnen wird bevorzugt in Form von Tropfen auf die Basisplatte oder eine der Schichten, die sich gegebenenfalls bereits auf der Basisplatte befinden, aufgebracht. Unter Tropfen im Sinne der Erfindung wird jede Materialmenge verstanden, deren maximale Ausdehnung in jede Raumrichtung nicht mehr als 1 mm, bevorzugt nicht mehr als 0,5 mm, oder bevorzugt nicht mehr als 0,1 mm beträgt. Bevorzugt liegt der mittlere Durchmesser der Tropfen in einem Bereich von 0,01 bis 1 mm, oder bevorzugt in einem Bereich von 0,05 bis 0,7 mm, oder bevorzugt in einem Bereich von 0,1 bis 0,5 mm. Unter mittlerem Durchmesser gemäß der Erfindung wird der Mittelwert, berechnet aus dem Durchmesser des Tropfens an der Stelle mit der größten Ausdehnung und dem Durchmesser des Tropfens an der Stelle mit der kleinsten Ausdehnung verstanden. Die Tropfen können dabei auf die gesamte Fläche der Basisplatte oder der vorherig aufgebrachten Schicht aufgebracht werden oder lediglich auf einen Teil der Fläche der Basisplatte oder vorherig aufgebrachten Schicht. Die Tropfen können eine Form aufweisen, ausgewählt aus der Gruppe bestehend aus kreisförmig, oval, eckig oder einer Kombination aus mindestens zwei hiervon. Bevorzugt wird mindestens eine Materialbahn, oder bevorzugt mindestens zwei Materialbahnen oder bevorzugt alle Materialbahnen zur Bildung des dreidimensionalen Objekts, in Form von Tropfen auf die Basisplatte oder eine zuvor aufgebrachte Schicht aufgebracht.

Je nach Viskosität, Größe und Abstand der Tropfen können die Tropfen zu einer Materialbahn zusammenfließen, die die gesamte Fläche der zu beschichtenden Oberfläche, wie Basisplatte oder bereits aufgebrachter Schicht, überdecken. Alternativ kann der Abstand zwischen den Tropfen so gewählt werden, dass von einander getrennte Materialbahnen in Form von Tropfen nur einen Teil der Basisplatte oder vorherig aufgebrachten Schicht überdecken. Bevorzugt überdeckt die Materialbahn die Basisplatte oder vorherig aufgebrachte Schicht zu einem Teil in einem Bereich von 2 bis 100 %, oder bevorzugt in einem Bereich von 10 bis 100 %, oder bevorzugt in einem Bereich von 20 bis 100 %, oder bevorzugt in einem Bereich von 50 bis 100 %, bezogen auf die Gesamtfläche der Basisplatte bzw. der Gesamtfläche der vorherig aufgebrachten Schicht. Auf diese Weise können dreidimensionale Objekte hergestellt werden, bei denen einzelne Schichten zu mehr als ihren zwei direkt benachbarten Schichten Kontakt haben kann.

Die Tropfen haben bevorzugt ein Volumen in einem Bereich von 1 pl bis 500 µl, oder bevorzugt in einem Bereich von 5 pl bis 400 µl, oder bevorzugt in einem Bereich von 10 pl bis 300 µl. Die Materialbahn, die bevorzugt aus Tropfen gebildet wird, weist bevorzugt eine Länge in einem Bereich von 0,1 mm bis 100 m, oder bevorzugt in einem Bereich von 0,5 mm bis 50 m, oder bevorzugt in einem Bereich von 1 mm bis 10 m auf. Die Dicke der Materialbahn nach Auftrag liegt bevorzugt in einem Bereich von 1 µm bis 1,25 mm, oder bevorzugt in einem Bereich von 5 µm bis 0,9 mm.

Neben den seit langer Zeit bekannten Depositionsverfahren, wie Inkjet, kann für das Auftragen von Material in Form von Materialbahnen beispielsweise das ARBURG Kunststoff-Freiformen (AKF) mittels des "freeformer" Geräts der Firma ARBURG GmbH + Co KG verwendet werden, bei dem auf Basis von 3D-CAD Daten kleinste Tropfen auf die gewünschte Oberfläche aufgebracht werden können.

Bei den erfindungsgemäßen Verfahren ist vorgesehen, dass zur Erstellung von mindestens einer Schicht ein aushärtbares Polymer oder aushärtbares Reaktionsharz mit jeweils einem Elastizitätsmodul (E-Modul) im gehärteten Zustand von ≥ 500 MPa in fließfähiger Form als Materialbahnen auf eine plane Basisplatte bzw. einen Untergrund aufgebracht wird. Darunter wird verstanden, dass wenigstens 80 Gew.-%, insbesondere wenigstens 90 Gew.-%, bevorzugt wenigstens 95 Gew.-% und bis zu 100 Gew.-% der erzeugten Schicht aus ausgehärteten Polymeren und/oder Reaktionsharzen besteht, die in diesem Zustand einen E-Modul ≥ 500 MPa besitzen.

Eine bevorzugte Ausführungsform richtet sich auf ein erfindungsgemäßes Verfahren, in dem mindestens die erste Schicht erstellt wird, indem ein aushärtbares Polymer oder aushärtbares Reaktionsharz mit jeweils einem E-Modul im gehärteten Zustand von ≥ 500 MPa in fließfähiger Form als Materialbahnen auf den jeweiligen Untergrund aufgetragen wird.

Eine bevorzugte Ausführungsform richtet sich auf ein erfindungsgemäßes Verfahren, in dem mindestens die zweite Schicht erstellt wird, indem ein aushärtbares Polymer oder aushärtbares Reaktionsharz mit jeweils einem E-Modul im gehärteten Zustand von ≥ 500 MPa in fließfähiger Form als Materialbahnen auf den jeweiligen Untergrund aufgetragen wird.

Eine weitere bevorzugte Ausführungsform richtet sich auf ein erfindungsgemäßes Verfahren, in dem mindestens 5, mehr bevorzugt mindestens 10, noch mehr bevorzugt mindestens 15 Schichten erstellt werden, indem ein aushärtbares Polymer oder aushärtbares Reaktionsharz mit jeweils einem E-Modul im gehärteten Zustand von ≥ 500 MPa in fließfähiger Form als Materialbahnen auf den jeweiligen Untergrund aufgetragen werden.

Eine weitere bevorzugte Ausführungsform richtet sich dabei auf ein erfindungsgemäßes Verfahren, in dem alle Schichten erstellt werden, indem ein aushärtbares Polymer oder aushärtbares Reaktionsharz mit jeweils einem E-Modul im gehärteten Zustand von ≥ 500 MPa in fließfähiger Form als Materialbahnen auf den jeweiligen Untergrund aufgetragen werden.

Eine weitere bevorzugte Ausführungsform richtet sich dabei auf ein erfindungsgemäßes Verfahren, in dem die erste und die letzte Schicht erstellt werden, indem ein aushärtbares Polymer oder aushärtbares Reaktionsharz mit jeweils einem E-Modul im gehärteten Zustand von < 500 MPa in fließfähiger Form als Materialbahnen auf den jeweiligen Untergrund aufgetragen werden, und alle zwischen der ersten und der letzten Schicht erstellt werden, indem ein aushärtbares Polymer oder aushärtbares Reaktionsharz mit jeweils einem E-Modul im gehärteten Zustand von ≥ 500 MPa in fließfähiger Form als Materialbahnen auf den jeweiligen Untergrund aufgetragen werden.

Eine weitere bevorzugte Ausführungsform richtet sich dabei auf ein erfindungsgemäßes Verfahren, in dem die erste 1 bis 10 Schichten und die letzte 1 bis 10 Schicht erstellt werden, indem ein aushärtbares Polymer oder aushärtbares Reaktionsharz mit jeweils einem E-Modul im gehärteten Zustand von < 500 MPa in fließfähiger Form als Materialbahnen auf den jeweiligen Untergrund aufgetragen werden, und die Schicht(en) (bevorzugt alle Schichten) zwischen den ersten 1 bis 10 Schichten und den letzten 1 bis 10 Schicht erstellt werden, indem ein aushärtbares Polymer oder aushärtbares Reaktionsharz mit jeweils einem E-Modul im gehärteten Zustand von ≥ 500 MPa in fließfähiger Form als Materialbahnen auf den jeweiligen Untergrund aufgetragen werden.

Die Schichtdicke einer Schicht eines dreidimensionalen Objektes hergestellt nach einem erfindungsgemäßen Verfahren liegt bevorzugt in einem Bereich von 0,025 mm bis 1,25 mm, mehr bevorzugt in einem Bereich von 0,1 mm bis 0,9 mm.

Der Austrittsdurchmesser des Materialstrahls von der Düse (der proportional zum Düsenauslassdurchmesser und des Materialvorschubs ist) liegt in erfindungsgemäßen Verfahren bevorzugt im Bereich von 0,025 mm bis 1,4 mm. Er beträgt jedoch bevorzugt mindestens 0,03 mm. Bevorzugt liegt er in einem Bereich von 0,03 mm bis 1,3 mm, mehr bevorzugt in einem Bereich von 0,15 bis 1 mm. Durch einen geringeren Abstand zwischen Düse und Untergrund (plane Basisplatte, Zwischenlage, oder bereits aufgetragene Lage(n)) bezogen auf den Düsenauslassdurchmesser kommt es zu einer geringeren Dicke (Höhe) einer Lage. Das Material wird dadurch zu einem Strang mit ovalem Querschnitt gequetscht. Ohne an die Erklärung gebunden zu sein führt ein kleinerer Abstand der Düse vom Untergrund im Verhältnis zum Austrittsdurchmesser des Materialstrahls zu einer besseren Haftung der neu entstehenden Schicht auf dem jeweiligen Untergrund.

Bevorzugt wird die erste Schicht in einem erfindungsgemäßen Verfahren aus einem Polymer, noch bevorzugter ein thermoplastisches Polymer, hergestellt, das einen E-Modul von mindestens 500 Megapascal (MPa), bevorzugt 800 MPa, mehr bevorzugt 1GPa, noch mehr bevorzugt 1,5 GPa wie z. B. einen E-Modul im Bereich von 500 MPa bis 20 GPa oder einen E-Modul im Bereich von 800 MPa bis 10 GPa.

Gemäß der vorliegenden Erfindung können unterschiedliche Schichten eines Flächenabschnitts aus unterschiedlichen Stoffmischungen hergestellt werden oder alle Schichten eines Flächenabschnitts können aus derselben Stoffmischung hergestellt werden. Darüber hinaus ist es auch möglich, dass eine Schicht aus unterschiedlichen Stoffmischungen besteht, bevorzugt ist jedoch, dass das aushärtbare Polymer bzw. aushärtbare Reaktivharz in diesen unterschiedlichen Stoffmischungen jeweils das gleiche aushärtbare Polymer bzw. aushärtbare Reaktivharz ist (z. B. kann eine Schicht aus PU-Mischungen mit verschiedenen Farbpigmenten bestehen).

Unterschiedliche Schichten können unterschiedliche Formen aufweisen. Je nach Art des herzustellenden dreidimensionalen Gebildes dessen Außenfläche wenigstens einen Flächenabschnitt gemäß dem hierin beschriebenen Verfahren hergestellt umfasst, wird die Form des wenigstens einen Flächenabschnittes gewählt. Handelt es sich bei dem Flächenabschnitt z. B. um Handyhüllen, Gehäusen z. B. von Elektroartikeln, die ein 3D-Relief aufweisen, Verpackungen oder Möbel mit Oberflächenstrukturen, A, B oder C-Säule ein Dachmodul oder ein Armaturenbrett eines Automobils, eine Sitzschale, einen Filterkorb, Medizinprodukte wie steife Korsette oder Orthesen, Protektoren, Dämpfungselemente oder Leichtbaustrukturen mit Gerüststruktur wird der Fachmann entsprechend eine asymmetrische Form für den Flächenabschnitt wählen, die so gewählt ist, das nach Thermoformen bzw. Tiefziehen des Flächenabschnitts in ein 3-dimensionales Objekt dieses bereits die gewünschte dreidimensionale Form aufweist.

In einer bevorzugten Ausführungsform bestimmt die Ausdehnung der ersten Schicht in der Arbeitsebene die größte flächige Ausdehnung der Schichten des Flächenabschnitts aus dem ein dreidimensionales Objekt geformt wird.

In einer weiteren bevorzugten Ausführungsform stellt die erste Schicht in einem erfindungsgemäßen Verfahren flächenmäßig die größte Schicht in einem Flächenabschnitt dar bzw. keine der weiteren Schichten eines Flächenabschnitts, hergestellt gemäß dem hierin beschriebenen Verfahren, besitzt eine größere Fläche als die erste Schicht, besonders bevorzugt liegt, wenn man orthogonal auf die XY-Arbeitsebene in einem erfindungsgemäßen Verfahren schaut, keine der weiteren Schichten eines Flächenabschnitts in X- und/oder Y-Ausdehnung außerhalb der Fläche, die durch die erste Schicht auf der planen Basisplatte gebildet wird.

In einer weiteren bevorzugten Ausführungsform wird die erste Schicht auf einer planen Basisplatte geformt, bei der der Betrag des Höhenunterschieds der planen Basisplatte auf einer gedachten Z-Achse in einem eingeblendeten orthogonalen Koordinatensystem, wobei die plane Basisplatte in XY-Ebene definiert ist (siehe Fig. 2), bezogen auf die Fläche der ersten, aufgetragenen Schicht auf die planen Basisplatte maximal 5% , bevorzugt maximal 3%, mehr bevorzugt maximal 1% noch mehr bevorzugt maximal 0,5%, besonders bevorzugt maximal 0,1% ausmacht und wobei sowohl die maximalen, orthogonalen Ausdehnungen des Flächenabschnitts in der XY-Ebene mindestens einen Faktor 5, bevorzugt mindestens einen Faktor 10, mehr bevorzugt mindestens einen Faktor 25, noch mehr bevorzugt mindestens einen Faktor 50 wie z. B. mindestens einen Faktor 100 größer sind als der Höhenunterschied auf der relevanten Fläche der planen Basisplatte.

Wie bereits erläutert, setzt sich eine Schicht bei einem Verfahren im Sinne der Erfindung aus einzelnen Materialbahnen zusammen, die je nach Abstand voneinander und dem Verhältnis zwischen Düsenauslassdurchmesser und Abstand der Düse vom Untergrund auch in dem ausgehärteten Flächenabschnitt als einzelne Bahn(en) in der Schicht vorliegen oder durch Zusammenfließen eine flächige Schicht bilden, die gegebenenfalls Aussparungen aufweisen kann. Wie bereits erwähnt können die Materialbahnen aus tropfenförmig aufgebrachten Bereichen an Material auf der Basisplatte oder auf einer vorherig aufgebrachten Schicht bestehen.

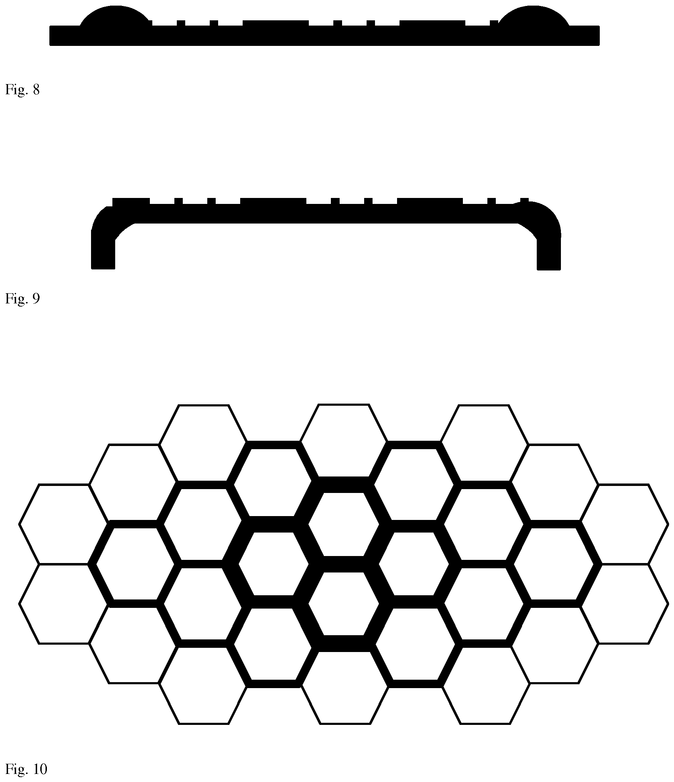

"Poren" im Sinne der vorliegenden Erfindung werden durch zwei Schichten gebildet, wobei beide Schichten Abstände der eine Schicht bildenden Materialbahnen aufweisen und der Auftragungswinkel der beiden Schichten zueinander ≠ 0° ist. "Aussparungen" im Sinne der vorliegenden Erfindung sind nicht mit Material der Schicht bedeckte Flächen innerhalb einer Schicht, die durch sich zeitweise räumlich trennende Materialbahnen, die jedoch mindestens 2 Berührungspunkte miteinander aufweisen bzw. durch eine sich selbst in Auftragungsrichtung erneut berührende/schneidende Materialbahn (z. B. Kreis) erzeugt werden (z. B. Hexagonalgitter in Fig. 10). "Lücken" im Sinne der vorliegenden Erfindung sind Unterbrechungen auf einer Schicht, bei denen sich Flächen einer Ebene nicht berühren und der Abstand zwischen diesen Flächen einer Schicht mindestens 5 Materialbahndicken beträgt.

Werden die Materialbahnen in Form von Tropfen aufgebracht, so kann durch die Variation des Abstandes der Tropfen zueinander oder durch die Wahl der Größe, wie dem Durchmesser der Tropfen, eine Lücke, beispielsweise in Form einer Pore, ohne Material in dieser Schicht generiert werden. Werden in dem Schichtaufbau an der gleichen Stelle über mehrere Schichten hinweg kein Material aufgebracht, so können Lücken über mehrere Materialbahnen hinweg erzeugt werden. Bevorzugt weisen die Lücken eine Ausdehnung innerhalb der Schicht in einem Bereich von 0,01 bis 1 mm, oder bevorzugt in einem Bereich von 0,05 bis 0,7 mm, oder bevorzugt in einem Bereich von 0,1 bis 0,5 mm auf. Bevorzugt weisen die Lücken eine Ausdehnung senkrecht zu der Schicht in einem Bereich von 0,01 bis 1 mm, oder bevorzugt in einem Bereich von 0,05 bis 0,7 mm, oder bevorzugt in einem Bereich von 0,1 bis 0,5 mm auf.

Diese Bahnen können nicht nur linear, sondern auch z. B. in einem schlangenförmigen Muster z.B. parallel zueinander auf den jeweiligen Untergrund aufgetragen werden oder die Auftragungsorientierung kann geändert werden.

Eine Schicht im Sinne der vorliegenden Erfindung kann aus Materialbahnen mit durchgehend weitestgehend gleichem Parallelabstand zueinander bestehen, die sich nicht berühren und erst durch Kontakt mit einer darunter liegenden oder darüber liegenden Schicht miteinander verbunden werden. Es ist ebenso möglich, dass die Schicht aus einer zusammenhängenden Fläche besteht wie z. B. eine flächige Schicht mit oder ohne Aussparungen oder Lücken. Ferner kann die zusammenhängende Schicht durch Materialbahnen gebildet sein, die nicht parallel zueinander verlaufen sondern bei denen sich mindestens zwei Materialbahnen mehr als einmal berühren und so eine zusammenhängende, ggf. geometrische Figuren bilden können, wie Hexagone, kreisförmige oder unsymmetrische Poren. Bevorzugt haben alle Materialbahnen solch einer Schicht mehr als 2, bevorzugt mehr als 5 noch mehr bevorzugt mehr als 10 Berührungspunkte mit benachbarten Materialbahnen.

Bevorzugt ist eine Schicht in einem erfindungsgemäßen Verfahren dadurch gekennzeichnet, dass sie auf dem gleichen Untergrund entsteht. Dabei kann eine Schicht im Sinn der vorliegenden Erfindung auch aus mehreren sich nicht berührenden Flächen bestehen oder aus Materialbahnen bestehen, die zwischen den Flächen und/oder Materialbahnen bei der Auftragung einen Abstand von mindestens 5 Materialbahndicken, bevorzugt mindestens 10 Materialbahndicken, mehr bevorzugt mindestens 20 Materialbahndicken, aufweisen (Lücken), die erfindungsgemäß auf einen Untergrund aufgebracht werden.

Der Untergrund einer neu aufzutragenden Schicht in einem erfindungsgemäßen Verfahren kann z. B. die plane Basisplatte, eine Zwischenlage oder die zuletzt aufgetragene Schicht darstellen. In einer weiteren Ausführungsform der vorliegenden Erfindung ist der Untergrund für eine neu aufzutragende Schicht in einem erfindungsgemäßen Verfahren nicht nur die zuletzt aufgetragene Schicht sondern auf mehr als eine der bereits aufgetragenen Schichten (z. B. bei Aussparungen oder Lücken auf der zuletzt aufgetragenen Schicht oder einer kleineren zuletzt aufgetragenen Schicht gegenüber der neuen und der vorher aufgetragenen Schicht). Eine mögliche Ausgestaltung ist die Auftragung der ersten der zwei Schichten eines vollflächigen Musters und/oder Schriftzugs auf die zweite Schicht der die Wabenstruktur bildenden Schichten und die zweite Schicht der aus parallelen, um 90° gedrehten Bahnen bestehenden ersten beiden Schichten. Durch die großen Abstände (Aussparungen) in der dritten und vierten Schicht (das Wabenmuster) werden die Materialbahnen der ersten der beiden Muster/Schriftzug-Schichten von einer Düse in einem erfindungsgemäßen Verfahren sowohl auf die die Hexagonale bildendenden Materialbahnen der vierten Schicht als auch in den Aussparungen der Wabenstruktur auf die im Verhältnis zu den Materialbahnen der ersten Schicht um 90° versetzten Materialbahnen der zweiten Schicht aufgetragen.

Entsprechend richtet sich eine Ausführungsform der vorliegenden Erfindung auf Flächenabschnitte und dreidimensionale Objekte bzw. erfindungsgemäße Verfahren resultierend in diesen Flächenabschnitten bzw. dreidimensionalen Objekten, worin mindestens eine Schicht auf zwei oder mehr zuvor aufgetragene Schichten aufgetragen wird. Dies geschieht z. B. wenn eine zweite Schicht, die auf eine untere ersten Schicht aufgetragen wurde, Abstände zwischen Materialbahnen, Lücken oder andere geometrische Aussparungen (z. B. hexagonale Aussparungen) aufweist, die so groß sind, dass neu aufgetragene Materialbahnen einer dritten Schicht nicht nur auf dem Material der zweiten Schicht aufliegen, sondern sich das Material durch das Fließverhalten im fließfähigen Zustand sich aufgrund der Abstände zwischen den Materialbahnen der zweiten Schicht oder den Lücken in der zweiten Schicht direkt auf das Material der ersten Schicht mit ablagert. Die Schicht ist in diesem Fall jedoch immer noch durch ihre zueinander parallelen Materialbahnen bzw. zusammenhängende Fläche oder zusammenhängenden Materialbahnen, die asymmetrische oder geometrische Figuren wie Waben formen, definierbar.

Insbesondere bei der Bildung mindestens einer Schicht durch Auftrag einer Materialbahn in Form von Tropfen kann ein Kontakt einer zuvor aufgebrachten Schicht mit einer danach aufgebrachten Schicht ermöglicht werden, die bei einer vollflächigen Beschichtung der Basisplatte oder der vorherigen Schicht nicht möglich wäre.

Das Dickenprofil einer einzelnen Materialbahn kann entsprechend während der Extrusion in Längsrichtung verändert werden. Insbesondere ist es von Bedeutung, dass dabei auch eine minimale Dicke von 0 mm erreicht werden kann (keine Extrusion an dieser Stelle). Hierdurch lässt sich die Materialablage über Teile oder die gesamte Breite einer Materialbahn abstellen und Aussparungen oder Lücken in einer Schicht eines Flächenabschnitts erreichen.

Eine zweckmäßige Vorgehensweise zur Darstellung von Lücken (Ausnehmungen) im Bauteil ist es, die Düsenöffnung während des Spritzens (Jetting) oder Extrudierens in den entsprechenden auszusparenden Bereichen zu schließen oder den Materialfluss durch die Düse an dieser Stelle zu unterbrechen und nach deren Überschreitung wieder zu öffnen bzw. den Materialvortrieb vor der Düse zu stoppen und nach Überschreitung wieder zu starten.

Für den Zusammenhalt der Materialbahnen innerhalb einer Schicht, der Schichten untereinander, bzw. der interlaminaren Festigkeit des fertigen Bauteils ist es von Bedeutung, dass die Materialschichten möglich stofflich aneinander anbinden. Hierzu ist es insbesondere vorgesehen, dass die untenliegende Materialbahn bzw. geometrischen Formen wie Wabenstrukturen beim Auftragen einer weiteren Schicht nur teilgehärtet und die Endhärtung erst zusammen mit der Härtung der darüber abgelegten Materialbahnen erfolgt. Dies ist beispielsweise dadurch möglich, dass die Aushärtung des gerade abgelegten Materials mit der Geschwindigkeit gestartet wird, dass noch reaktive Komponenten beim darauf folgenden Zyklus der Materialablage vorhanden sind. Die Rekristallisation noch amorpher Polymere der gerade abgelegten Materialbahn bzw. des abgelegten Materials (bei durchgehenden Schichten oder z. B. Wabenstrukturen) muss dabei nur so weit eingestellt werden, dass sie zumindest dimensionsstabil bleibt, also nicht davon fließt. Bevorzugt wird die Aushärtegeschwindigkeit so eingestellt, dass die Endhärtung zusammen mit der Härtung der unmittelbar darüber abgelegten Materialbahn erfolgt.

Wie bereits erwähnt, können auch innerhalb einer Schicht und auch innerhalb einer Materialbahn unterschiedliche Materialzusammensetzungen verwendet werden. Dies ist z. B. durch Mehrkopfextrusion möglich und erlaubt z. B. das nacheinander aber in der gleichen Schicht Auftragen von unterschiedlichen Materialien (z. B. unterschiedliche Farben innerhalb einer Schicht).

Es ist jedoch bevorzugt, dass eine Schicht jeweils aus dem gleichen Polymer oder Reaktivharz besteht, unabhängig davon welche weiteren Zusatzstoffe diesem Polymer oder Reaktivharz zugefügt sind. Entsprechend richtet sich eine bevorzugte Ausführungsform auf ein erfindungsgemäßes Verfahren worin jede Schichte eines Flächenabschnitts aus Materialbahnen mit demselben Polymer oder Reaktivharz bestehen. Eine weitere Ausführungsform richtet sich auf ein erfindungsgemäßes Verfahren worin jede Schicht eines Flächenabschnitts aus Materialbahnen mit demselben Polymer oder Reaktivharz bestehen.

### Flächenabschnitt

Ein "zweidimensionaler Flächenabschnitt" zur Verwendung in der Herstellung eines dreidimensionalen Körpers im Sinne der vorliegenden Erfindung bezieht sich auf ein Gebilde wobei die Ausdehnung - nach Erstellung durch ein generatives Herstellungsverfahren und vor Verformung in ein dreidimensionales Objekt - der einzelnen Schichten in Richtung X-und Y-Achse (ΔX und ΔY) in einem gedachten kartesischen Koordinatensystem jeweils mindestens um einen Faktor 5, wie etwa um einen Faktor 10, bevorzugt um mindestens einen Faktor 20, mehr bevorzugt um mindestens einen Faktor 30 größer ist als die Höhe des Flächenabschnitts, die durch die Anzahl der gebildeten Schichten bestimmt wird (Ausdehnung in Z-Richtung: ΔZ). Ein Flächenabschnitt im Sinne der vorliegenden Erfindung ist in anderen Worten ein bevorzugt flächiger Gegenstand, der aus 1 bis maximal 200 bzw. bei einem erfindungsgemäßen Verfahren, in dem eine erste Schicht umfassend sich nicht berührende, bevorzugt parallel zueinander verlaufende Bahnen aufgetragen wird aus 2 bis maximal 200 Schichten besteht. Der Ausdruck "2 bis maximal 200 Schichten" bezieht sich bei einem Flächenabschnitt im Sinne der vorliegenden Erfindung auf die Stelle des Flächenabschnitts mit der maximalen Anzahl an Schichten, die in einem erfindungsgemäßen Verfahren orthogonal zur Arbeitsebene aufgetragen werden (übereinander gelagerte Schichten). In anderen Worten, an keiner Stelle eines gemäß einem erfindungsgemäßen Verfahren hergestellten Flächenabschnittes werden in einem erfindungsgemäßen Verfahren mehr als 200 Schichten übereinander aufgetragen, jedoch können z.B. an anderen Stellen auch weniger Schichten übereinander aufgetragen werden.

In einer bevorzugten Ausführungsform liegt die Anzahl der Schichten, die den zweidimensionalen Flächenabschnitt bilden, im Bereich von 2 bis 200, bevorzugt im Bereich von 2 bis 150, mehr bevorzugt im Bereich von 2 bis 100, noch mehr bevorzugt im Bereich 2 bis 50.

In einer weiteren bevorzugten Ausführungsform beträgt die Anzahl der Schichten eins (1), wobei diese Schicht eine flächige Schicht mit oder ohne Aussparungen darstellt.

Bevorzugt beträgt die Höhe eines Flächenabschnitts (orthogonale Ausdehnung des Flächenabschnitts zur Schichtausrichtung (Z-Achse), die proportional zur Anzahl der übereinander angeordneter Schichten ist) maximal 10 cm mehr bevorzugt maximal 3 cm, mehr bevorzugt maximal 1 cm, noch mehr bevorzugt maximal 0,5 cm. Bevorzugt beträgt die minimale Höhe eines Flächenabschnitts minimal 0,025 mm, mehr bevorzugt minimal 0,1 mm, noch mehr bevorzugt minimal 0,2 mm wie etwa 0,5 mm. Im Fall eines Korsettes liegt die Dicke des Flächenabschnitts bevorzugt im Bereich von 0,5 cm bis 1,5 cm.

Bevorzugt besteht ein Flächenabschnitt hergestellt gemäß eines erfindungsgemäßen Verfahrens aus 1 bis 200 Schichten, bevorzugt 2 bis 150 Schichten, wobei jede Schicht unabhängig voneinander eine Dicke (Höhe) im Bereich von 0,025 mm bis 1,25 mm, mehr bevorzugt in einem Bereich von 0,1 mm bis 0,9 mm aufweist.

In einer bevorzugten Ausführungsform beträgt die Fläche eines Flächenabschnitts der gemäß eines erfindungsgemäßen Verfahrens hergestellt wird, mindestens 5 cm², bevorzugt mindestens 10 cm², mehr bevorzugt mindestens 25 cm² wie etwa mindestens 40 cm², mindestens 50 cm² oder mindestens 100 cm², jedoch sind die maximalen orthogonalen Ausdehnungen in der Arbeitsebene jeweils mindestens um einen Faktor 5, besser um einen Faktor 10, bevorzugt um einen Faktor 20, mehr bevorzugt um einen Faktor 30, noch mehr bevorzugt mindestens um einen Faktor 50 größer ist als die maximale Abweichung in der Z-Ebene.

Zum Beispiel werden Handyhüllen heute aus einer thermoplastischen Folie tiefgezogen. Nachteil beim heutigen Verfahren basierend auf einer Folie mit gleichförmiger Dicke ist, dass die Seitenflächen und Biegekanten sehr dünn werden. Die mechanische Abnutzung ist allerdings gerade auf den Seitenflächen und Kanten am höchste, sodass dort häufig mechanisches Versagen (Bruch) auftritt. Ein 3D-gedruckter Film kann eine solche Topographie aufweisen, dass mehr Material auf den späteren Seitenflächen und Kanten gedruckt wird. Darüber hinaus lassen sich durch das erfindungsgemäße Verfahren noch spezielle Verstärkungen entlang von Zugkraft-Richtungen, sowohl durch mehr Materialauftrag als auch durch Drucken unterschiedlicher Materialien mit unterschiedlichem E-Modul, realisieren.

In einer bevorzugten Ausführungsform besitzt ein Flächenabschnitt mindestens eine Schicht, die aus zueinander parallelen Materialbahnen oder aus einer durchgehenden Fläche besteht. Die Bahndichte der Materialbahnen liegt bei Schichten, die aus einer durchgehenden Fläche bestehen, bei 100%. Die Bahndichte der Materialbahnen liegt bei einer Schicht, die aus zueinander parallelen Materialbahnen besteht, generell in einem Bereich von 0,1% (1000-facher Abstand zwischen zwei Bahnen bezogen auf die Materialbahndicke) bis 100% (durchgehende Fläche, kein Abstand zwischen den aufgetragenen Materialbahnen), besonders bevorzugt zwischen 1% und 100%, z.B. zwischen 10% und 100%.

### Aushärtevorgang

Nach Auftragen wenigstens einer Schicht in einem erfindungsgemäßen Verfahren und ggf. nach Auftragen weiterer Schichten zur Herstellung eines Flächenabschnitts im Sinn der vorliegenden Erfindung kann eine Stoffmischung z. B. durch kalte oder heiße Polymerisation bzw. Polyaddition oder Polykondensation, Addition (z. B. PU-Addition) oder Kondensation oder auch Initiierung durch elektro-magnetische Strahlungen, insbesondere UV-Strahlung, zum Aushärten gebracht werden. Thermisch härtende Kunststoffmischungen können durch eine entsprechende IR-Strahlungsquelle ausgehärtet werden.

Entsprechend richtet sich eine bevorzugte Ausführungsform auf ein Verfahren in dem die Aushärtung des zweidimensionalen Flächenabschnittes durch Absenken der Temperatur der Materialbahnen unterhalb des Temperaturbereichs des Schmelzbereiches einer fließfähigen und aushärtbaren Stoffmischung (die Auftragungstemperatur zum Beispiel in einem FFF-Verfahren liegt entsprechend innerhalb oder bevorzugt oberhalb des Schmelzbereiches der entsprechenden fließfähigen und aushärtbaren Stoffmischung) erreicht wird.

Eine weitere bevorzugte Ausführungsform richtet sich entsprechend auf ein Verfahren in dem die Aushärtung des zweidimensionalen Flächenabschnittes durch den Einsatz eines UV-aktivierbaren Härters erfolgt. Geeignete UV aktivierbare Härter sind dabei zum Beispiel Produkte der Firma BASF unter dem Markennamen Irgacure die je nach chemischer Zusammensetzung bei verschiedenen Wellenlängen durch photochemische Freisetzung von Radikalen eine Härtungsreaktion bei geeigneten häufig doppelbindungstragenden Verbindungen initiieren.

Im Stand der Technik sind verschiedene Zwei- oder Mehrkomponentensyteme beschrieben, die verdruckt werden können. So ist beispielsweise aus der DE 19937770 A1 ein Zweikomponentensystem bekannt, dass eine Isocyanat-Komponente und eine isocyanat-reaktive Komponente umfasst. Von beiden Komponenten werden Tropfenstrahlen erzeugt, die so ausgerichtet werden, dass sie sich zu einem gemeinsamen Tropfenstrahl vereinigen. In dem gemeinsamen Tropfenstrahl setzt die Reaktion der Isocyanat-Komponente mit der isocyanat-reaktiven Komponente ein. Der gemeinsame Tropfenstahl wird auf ein Trägermaterial gelenkt, wo er unter Ausbildung eines polymeren Polyurethans zum Aufbau eines dreidimensionalen Körpers verwendet wird.

Ein Flächenabschnitt kann von der planen Basisplatte abgelöst werden. Dies kann vor einer Formung ganz erfolgen oder zunächst teilweise als Bestandteil des Formprozesses des dreidimensionalen Objektes. Sollte zwischen einer planen Basisplatte und einer erste Schicht gemäß eines erfindungsgemäßen Verfahrens eine Zwischenlage liegen, bezieht sich der Ausdruck ablösen des ausgehärteten Flächenabschnitts von der planen Basisplatte auf das Ablösen des Flächenabschnitts zusammen mit der Zwischenlage (wie ein Textil oder eine Folie) von der planen Basisplatte.

### Dreidimensionales Objekt, dessen Außenfläche wenigstens einen Flächenabschnitt umfasst, der gemäß dem hierin beschriebenen Verfahren hergestellt wurde

Bei einen dreidimensionalen Gebilde im Sinne der vorliegenden Erfindung kann es sich um Handyhüllen, Gehäusen z. B. von Elektroartikeln, die ein 3D-Relief aufweisen, Verpackungen oder Möbel mit Oberflächenstrukturen, A, B oder C-Säule, ein Dachmodul oder ein Armaturenbrett eines Automobils, eine Sitzschale, einen Filterkorb, Medizinprodukte wie steife Korsette oder Orthesen, Protektoren, Dämpfungselemente oder Leichtbaustrukturen mit Gerüststruktur etc. verwendet werden.

In einer bevorzugten Ausführungsform handelt es sich bei einen dreidimensionalen Gebilde um Eine Hülle aus Kunststoff, z. B. eine Handyhülle.

In einer weiteren bevorzugten Ausführungsform handelt es sich bei einen dreidimensionalen Gebilde um einen gewölbten, z. B. dem Schulterbereich oder Oberarmbereich angepassten, bevorzugt individuell angepassten, Protektor z. B. für Schultern, Oberarme oder Ellbogen wie er z. B. bei Motorradbekleidung Verwendung findet, das gemäß dem hierin beschriebenen Verfahren hergestellt wird.

### Formen

Aus einem zweidimensionalen Flächenabschnitt kann ein dreidimensionales Objekt durch Tiefziehen oder Thermoformen hergestellt werden, solange die Bedingungen dieses Verfahrens (z. B. hohe Temperatur) nicht zu einer Zerstörung des Flächenabschnitts führen. Die jeweiligen Bedingungen zur Ausführung von Tiefziehprozessen oder Thermoformen zur Verformung von den in dem erfindungsgemäßen Verfahren verwendeten aushärtbaren Polymeren oder Reaktivharzen, insbesondere Thermoplasten, sind dem Fachmann bekannt bzw. können von diesem durch Routineversuche ermittelt werden.

Beim Thermoformen erfolgt die Formgebung durch vorgegebene Formen (eine Positivform und eine dazu passende Negativform), die den zu formenden Gegenstand zwischen sich einklemmen. Bedingung im Sinne der vorliegenden Erfindung ist, dass die ebene Fläche des zweidimensionalen Flächenabschnitts eine Verformung in der orthogonal zur Ebene des zweidimensionalen Flächenabschnitts stehenden Z-Achse bei der Formgebung erfolgt. Die Fixierung erfolgt in diesem Fall durch das Abkühlen des nun dreidimensionalen Objektes. Z. B. kann so ein Protektor in Form einer gewölbten Fläche hergestellt werden.

### Individueller Protektor

Ein Aspekt der Erfindung betrifft ein Verfahren zur Herstellung eines Protektors angepasst an einen Nutzer umfassend die Schritte:
a) Bestimmen der relevanten Körperregiongeometriedaten des Benutzers;
b) Umrechnen der 3D-Körpergeometriedaten zur Erstellung eines Flächenabschnitts gemäß Schritten I) bis V) oder i) bis iii) gemäß einem Verfahren des Aspekts eins oder zwei;
c) Anfertigen eines dreidimensionalen Objektes gemäß einem Verfahren nach einem der Ansprüche 1 bis 13, wobei Schritt VI) bzw. Schritt iv) die dreidimensionale Formgebung durch Tiefziehen oder Thermoformen gemäß den Körperrregiongeometriedaten des Benutzers aus Schritt a) erfolgt.

Der Begriff Körperregiongeometriedaten und 3D-Körpergeometriedaten wird synonym verwendet.

In Schritt a) werden die dreidimensionalen Körpermaße der Region eines Benutzers (z. B. Oberarm, Oberschenkel, Oberkörper, Kopf, Unterarm, Unterschenkel oder jeweils Teile davon) vermessen, die durch einen Protektor geschützt werden sollen. Dies kann z. B. durch einen Laser geschehen oder es kann ein Abdruck der Region des Benutzers, die geschützt werden soll, gemacht werden, und der dreidimensionale Abdruck kann z. B. durch einen Laser oder andere dem Fachmann bekannte Verfahren vermessen werden.

Die Daten können z. B. auf einem Computer gespeichert werden und in einem Schritt b) kann die dreidimensionale Struktur so umgerechnet werden, dass in einem erfindungsgemäßen Verfahren die Form eines Flächenabschnitts hergestellt wird, der im Folgenden gemäß den Körperregiongeometriemaßen des Benutzers tiefgezogen oder thermoverformt wird (c)).

In Schritt a) können die Körperregiongeometriedaten zu verschiedenen Stellungen (z. B. entspannte Muskeln oder angespannte Muskeln, Beugung/Dehnung) vermessen werden. Anhand von gängigen Computerprogrammen kann in Schritt c) die nötige Passform eines Protektors berechnet werden, um alle Bewegungsabläufe einer zu schützenden Körperregion auch nach Anbringen eines Protektors zu ermöglichen. Auch kann die Größe eines Protektors einfach so kalkuliert werden, dass ein Spielraum zwischen Protektor und zu schützender Körperregion beibehalten wird, um eine möglichst freie Bewegung der Körperregion beizubehalten.

Das dreidimensional formgebende Tiefzieh- bzw. Thermoformenverfahren kann z. B. auf einer gemäß den Körperregiongeometriedaten erzeugten dreidimensionalen Form erfolgen.

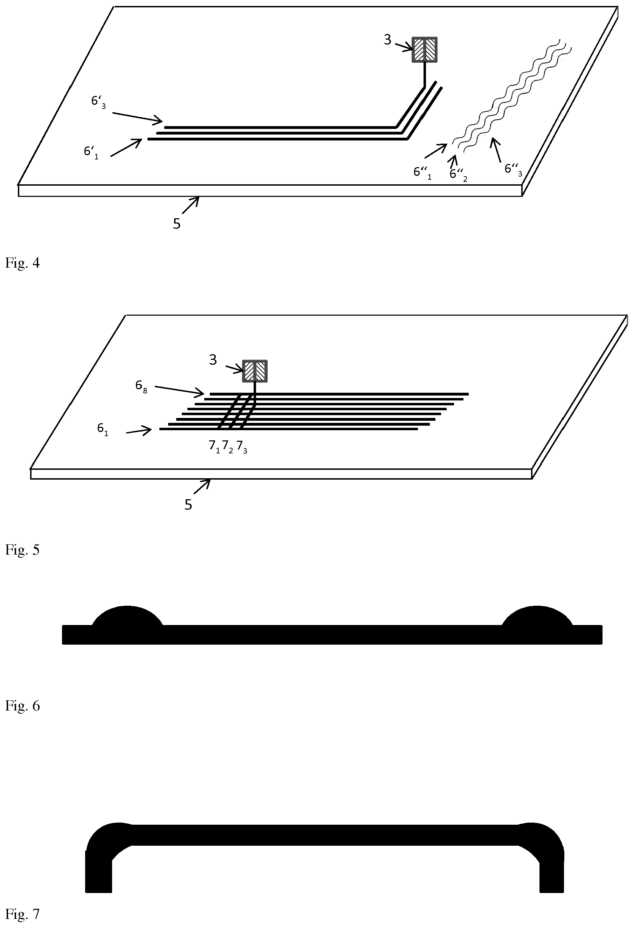

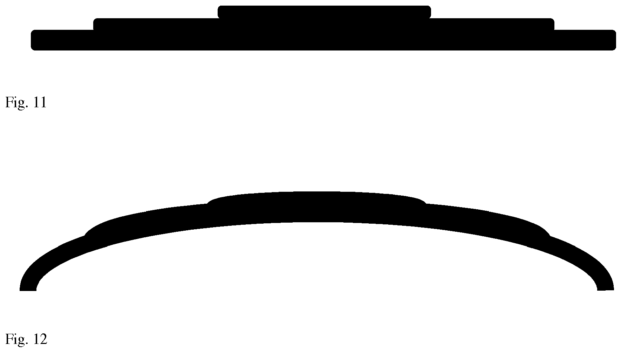

Die Erfindung wird im Folgenden anhand von Beispielen und den Fign. 1 bis 12 näher erläutert.
Fig. 1 zeigt einen typischen FFF-Verfahrensaufbau mit einem Polymer/Stoffmischungsvorrat in Form einer Polymerdrahtspule 1, einem Extruder 2, einer Auslassdüse 3 mit einem Auslassdurchmesser 4, wobei aus der Auslassdüse 3 eine aus der Polymerdrahtspule verflüssigte Stoffmischung als Materialbahn auf eine Unterlagen aufgetragen wird. Dabei werden mehrere Materialbahnen auf einer Unterlage in Form einer planen Basisplatte 5 als einzelne Schicht erzeugt, die eine durchgehende Fläche bestehend aus verbundenen Materialbahnen, eine Fläche bestehend aus miteinander verbundenen geometrischen Formen, wie einer Wabenstruktur, bilden können. Konkret ist in Fig. 1 schematisch der Fertigungsprozess eines zweidimensionalen Flächenabschnitts auf der planen Basisplatte 5 dargestellt, wobei eine erste Schicht 6 und eine zweite Schicht 7 bereits fertiggestellt wurden und nun eine dritte Schicht 7' auf die zweite Schicht 7 aufgebracht wird.
Fig. 2 zeigt die plane Basisplatte 5 mit einem darauf projizierten kartesischen Koordinatensystem mit den Achsen X, Y und Z.
In Fig. 3 ist die Auftragung von Materialbahnen für eine erste Materialschicht auf der planen Basisplatte 5 mittels der Auslassdüse in Form einer Spritzdüse 3 abgebildet. Die erste Schicht 6 setzt sich aus einzelnen Materialbahnen 6₁ bis 6₈ zusammen.
Fig. 4 zeigt auf der planen Basisplatte 5 mittels der Spritzdüse 3 aufgetragene, parallel zueinander verlaufende Materialbahnen einer ersten Ebene 6', die einen Orientierungswechsel aufweisen und parallel zueinander verlaufende Materialbahnen einer ersten Ebene 6", die in Schlangenlinien aufgetragen wurden.
Die Fig. 5 stellt schematisch das Auftragen einer zweiten Schicht 7 auf eine erste Schicht 6 dar, wobei die Materialbahnen 7₁ bis 7₃ der zweiten Schicht 7 in einem 80° Winkel zur Aufbringungsorientierung der Materialbahnen 6₁ bis 6₈ der ersten Schicht 6 auf die erste Schicht 6 aufgebracht werden.
Fig. 6 zeigt einen Querschnitt eines ausgehärteten Flächenabschnitts zur Erstellung einer Handyschale.
Fig. 7 zeigt einen Querschnitt einer durch Thermoformen des ausgehärteten Flächenabschnitts aus Fig. 6 erzeugten Handyschale.
Fig. 8 zeigt einen Querschnitt eines ausgehärteten Flächenabschnitts zur Erstellung einer Handyschale mit Oberflächenstruktur.
Fig. 9 zeigt einen Querschnitt einer durch Thermoformen des ausgehärteten Flächenabschnitts aus Fig. 8 erzeugten Handyschale mit Oberflächenstruktur.
Fig. 10 zeigt eine Aufsicht auf einen Flächenabschnitt aus Hexagonalschichten zur Erstellung eines Protektors.
Fig. 11 zeigt einen Querschnitt des ausgehärteten Flächenabschnitts aus Fig. 10.
Fig. 12 zeigt einen Querschnitt eines durch Thermoformen des ausgehärteten Flächenabschnitts aus Fig. 10 bzw. 11 erzeugten Protektors.

Die folgenden Parameterbereiche sind bevorzugte Parameterbereiche für die Produktion eines erfindungsgemäßen zweidimensionalen Flächenabschnitts mittels FFF:

| | |
|---|---|
| Temperatur der Basisplatte: | im Bereich von 20 °C bis 250°C, insbesondere 60 °C bis 200 °C, z. B. 80 °C |
| Temperatur der Düse: | im Bereich von 120 °C bis 400 °C |
| Fahrgeschwindigkeit: | im Bereich von 1 mm/s bis 60 mm/s |
| Durchmesser Filament: | im Bereich von 1,5 mm bis 3,5 mm |
| Düsendurchmesser: | im Bereich von 0,3 mm bis 1 mm |
| Schichtdicke: | im Bereich von 0,1 mm bis 0,9 mm (geringere Höhe als Düsendurchmesser resultiert aus Abstand zwischen Düse und oberster Lage < Düsendurchmesser → Material wird zu Strang mit ovalem Querschnitt gepresst) |
| Bahnbreite: | abhängig von Materialdüse im Bereich von 0,3 mm bis 1 mm |

## Patentansprüche

1. Verfahren zur Herstellung eines dreidimensionalen Objektes, dessen Außenfläche wenigstens einen Flächenabschnitt umfasst, der erzeugt wird indem mittels eines additiven Fertigungsverfahrens, insbesondere ein schichtaufbauendes Formgebungsverfahren, auf einer planen Basisplatte (5) zunächst ein Flächenabschnitt in zweidimensionaler Form produziert wird, umfassend die folgenden Schritte:
I) Auftragen wenigstens eines aushärtbaren Polymers oder aushärtbaren Reaktionsharzes in fließfähiger Form als Materialbahnen auf eine plane Basisplatte (5) mittels eines schichtaufbauenden Formgebungsverfahrens zur Erstellung einer ersten Schicht (6);
II) Auftragen einer zweiten Schicht (7) auf die erste Schicht (6), erstellt mittels eines schichtaufbauenden Formgebungsverfahrens;
III) optional Auftragen von 1 bis 198 weiteren Schichten erstellt gemäß Schritt II) wobei jeweils eine neue Schicht auf die jeweils vorherige Schicht aufgetragen wird;
IV) Aushärten der Schichten;
V) Ablösen des ausgehärteten Flächenabschnitt von der planen Basisplatte (5); und
VI) Formen des ausgehärteten Flächenabschnitts in ein dreidimensionales Objekt mittels Tiefziehen oder Thermoformen;
wobei mindestens eine Schicht durch Auftragen wenigstens eines aushärtbaren Polymers oder aushärtbaren Reaktionsharzes in fließfähiger Form als Materialbahnen auf den jeweiligen Untergrund mit jeweils einem Elastizitätsmodul im gehärteten Zustand von ≥ 500 MPa gemäß EN ISO 527-1 letzte Ausgabe vom April 1996, aktuelle ISO-Version Februar 2012 erstellt wird.

2. Verfahren zur Herstellung eines dreidimensionalen Objektes, dessen Außenfläche wenigstens einen Flächenabschnitt umfasst, der erzeugt wird indem mittels eines additiven Fertigungsverfahrens, insbesondere ein schichtaufbauendes Formgebungsverfahren, auf einer planen Basisplatte (5) zunächst ein Flächenabschnitt in zweidimensionaler Form produziert wird, umfassend die folgenden Schritte:
i) Auftragen wenigstens eines aushärtbaren Polymers oder aushärtbaren Reaktionsharzes mit jeweils einem Elastizitätsmodul, E-Modul genannt, im gehärteten Zustand von ≥ 500 MPa in fließfähiger Form als Materialbahnen auf eine plane Basisplatte (5) mittels eines schichtaufbauenden Formgebungsverfahrens zur Erstellung einer Schicht (6) wobei die Schicht eine zusammenhängende Fläche mit oder ohne Aussparungen, z. B. wabenförmig, darstellt;
ii) Aushärten der Schicht;
iii) Ablösen des ausgehärteten Flächenabschnitt von der planen Basisplatte (5); und
iv) Formen des ausgehärteten Flächenabschnitts in ein dreidimensionales Objekt mittels Tiefziehen oder Thermoformen.

3. Verfahren gemäß einem der Ansprüche 1 oder 2, **dadurch gekennzeichnet, dass** ein schichtaufbauende Formgebungsverfahren unabhängig voneinander ausgewählt ist aus einer Gruppe bestehend aus Schmelzschichtung, Fused Filament Fabrication (FFF) genannt, Ink-Jet-Printing und Photopolymer-Jetting.

4. Verfahren gemäß einem der Ansprüche 1 bis 3, wobei die Materialbahnen in Form von Tropfen auf die plane Basisplatte (5) oder eine der Schichten (6, 7), die sich gegebenenfalls bereits auf der Basisplatte (5) befinden, aufgebracht werden.

5. Verfahren nach einem der vorstehenden Ansprüche, **dadurch gekennzeichnet, dass** die Austrittstemperatur der Stoffmischungen aus der Düse in den Schritten I) bis III) im Bereich von 80 °C bis 420 °C liegt.

6. Verfahren nach einem der vorstehenden Ansprüche, **dadurch gekennzeichnet, dass** Basisplatte beheizt ist und die Heiztemperatur der Basisplatte in einem Bereich von 20 °C bis 250 °C liegt.

7. Verfahren nach einem der vorstehenden Ansprüche, **dadurch gekennzeichnet, dass** ein aushärtbares Polymer oder aushärtbaren Reaktionsharz mit jeweils einem Elastizitätsmodul, E-Modul genannt, im gehärteten Zustand von ≥ 500 MPa ausgewählt ist aus einer Gruppe bestehend aus thermoplastischem Polyurethan (TPU), Polycarbonat (PC), Polyamid (PA), Polyethylentherephtalat (PET), Polybutylentherephthalat (PBT), Cycloolefinische Copolyester (COC), Polyetheretherketon (PEEK), Polyetheramidketon (PEAK), Polyetherimid (PEI), Polyimid (PI), Polypropylen (PP) oder Polyethylen (PE), Acrylnitril-Butadien-Styrol (ABS), Polylactat (PLA), Polymethylmethacrylat (PMMA), Polystyrol (PS), Polyvinylchlorid (PVC), Polyoxymethylen (POM), Polyacrylnitril (PAN), Polyacrylat, Zelluloid bevorzugt ausgewählt aus einer Gruppe bestehend aus TPU, PA, PEI, und PC, besonders bevorzugt aus seiner Gruppe ausgewählt aus TPU und PC.

8. Verfahren nach einem der vorstehenden Ansprüche, **dadurch gekennzeichnet, dass** in allen Schichten dasselbe aushärtbare Polymer oder aushärtbare Reaktionsharz verwendet wird.

9. Verfahren nach einem der Ansprüche 1 oder 3 bis 7, **dadurch gekennzeichnet, dass** mindestens eine Schicht ein anderes aushärtbares Polymer oder aushärtbares Reaktionsharz umfasst.

10. Verfahren nach einem der vorstehenden Ansprüche, **dadurch gekennzeichnet, dass** in allen Schichten ein aushärtbares Polymer oder aushärtbares Reaktionsharz mit jeweils einem E-Modul im gehärteten Zustand von ≥ 500 MPa verwendet wird.

11. Verfahren nach einem der vorstehenden Ansprüche 1, 3 bis 7 oder 9, **dadurch gekennzeichnet, dass** in mindestens einer Schicht ein aushärtbares Polymer oder aushärtbares Reaktionsharz mit jeweils einem E-Modul im gehärteten Zustand von < 500 MPa verwendet wird.

12. Verfahren nach Anspruch 11, **dadurch gekennzeichnet, dass** in der ersten Schicht ein aushärtbares Polymer oder aushärtbares Reaktionsharz mit jeweils einem E-Modul im gehärteten Zustand von < 500 MPa verwendet wird.

13. Verfahren nach Anspruch 11 oder 12, **dadurch gekennzeichnet, dass** in der letzten Schicht ein aushärtbares Polymer oder aushärtbares Reaktionsharz mit jeweils einem E-Modul im gehärteten Zustand von < 500 MPa verwendet wird.

14. Verfahren nach einem der vorstehenden Ansprüche, **dadurch gekennzeichnet, dass** das dreidimensionale Objekt eine Handyhülle, ein Gehäuse z. B. von einem Elektroartikel, das ein 3D-Relief aufweist, eine Verpackung oder ein Möbelstück mit Oberflächenstrukturen, eine A, B oder C-Säule, ein Dachmodul oder ein Armaturenbrett eines Automobils, eine Sitzschale, ein Filterkorb, ein Medizinprodukte wie ein steifes Korsette oder eine Orthese, ein Protektor, ein Dämpfungselement oder eine Leichtbaustruktur mit Gerüststruktur ist.

15. Verfahren nach einem der Ansprüche 1 bis 14, wobei die erste Schicht auf eine Zwischenlage wie ein Textil oder eine Folie, die die flächige Form der planen Basisplatte an die erste Schicht eines erfindungsgemäßen Verfahren Form weitergibt, aufgetragen wird und mit der sich die Materialbahnen der ersten Schicht verbinden, so dass diese Zwischenlage Teil des Flächenabschnitts und damit auch Teil des dreidimensionalen Objektes wird.

16. Verfahren zur Herstellung eines Protektors angepasst an einen Nutzer umfassend die Schritte:
a) Bestimmen der relevanten Körperregiongeometriedaten des Benutzers;
b) Umrechnen der 3D-Körpergeometriedaten zur Erstellung eines Flächenabschnitts;
c) Anfertigen eines dreidimensionalen Objektes gemäß einem Verfahren nach einem der Ansprüche 1 bis 13, wobei Schritt VI) bzw. Schritt iv) die dreidimensionale Formgebung durch Tiefziehen oder Thermoformen gemäß den Körperrregiongeometriedaten des Benutzers aus Schritt a) erfolgt.

## Claims

1. Process for the production of a three-dimensional object, the external area of which comprises at least one area section which is produced in that an area section in two-dimensional form is first produced by means of an additive manufacturing process, in particular a layer-by-layer shaping process, on a flat base plate (5), comprising the following steps:
I) application of at least one hardenable polymer or hardenable reactive resin in flowable form in the form of lines of material onto a flat base plate (5) by means of a layer-by-layer shaping process for the production of a first layer (6);
II) application of a second layer (7) onto the first layer (6), produced by means of a layer-by-layer shaping process;
III) optionally application of from 1 to 198 further layers produced as in step II), where respectively a new layer is applied onto the respective preceding layer;
IV) hardening of the layers;
V) separation of the hardened area section from the flat base plate (5); and
VI) molding of the hardened area section to give a three-dimensional object by means of deep-draw or thermoforming;
where at least one layer is produced via application of at least one hardenable polymer or hardenable reactive resin in flowable form in the form of lines of material onto the respective substrate with respectively a modulus of elasticity in the cured state of ≥ 500 MPa in accordance with EN ISO 527-1, latest issue dated April 1996, current ISO version of February 2012.

2. Process for the production of a three-dimensional object, the external area of which comprises at least one area section which is produced in that an area section in two-dimensional form is first produced by means of an additive manufacturing process, in particular a layer-by-layer shaping process, on a flat base plate (5), comprising the following steps:
i) application of at least one hardenable polymer or hardenable reactive resin with respectively a modulus of elasticity in the cured state of ≥ 500 MPa in flowable form in the form of lines of material onto a flat base plate (5) by means of a layer-by-layer shaping process for the production of a layer (6), where the layer provides a coherent area with or without cutouts, e.g. in the shape of a honeycomb;
ii) hardening of the layer;
iii) separation of the hardened area section from the flat base plate (5); and
iv) molding of the hardened area section to give a three-dimensional object by means of deep-draw or thermoforming.

3. Process according to Claim 1 or 2, **characterized in that** a layer-by-layer shaping process is selected mutually independently from a group consisting of melt layering, called fused filament fabrication (FFF), inkjet printing and photopolymer jetting.

4. Process according to any of Claims 1 to 3, where the lines of material are applied in the form of droplets onto the flat base plate (5) or onto one of the layers (6, 7) that may already be present on the base plate (5).

5. Process according to any of the preceding claims, **characterized in that** the discharge temperature of the substance mixtures from the nozzle in the steps I) to III) is in the range from 80°C to 420°C.

6. Process according to any of the preceding claims, **characterized in that** base plate has been heated and the heating temperature of the base plate is in the range from 20°C to 250°C.

7. Process according to any of the preceding claims, **characterized in that** a hardenable polymer or hardenable reactive resin with respectively a modulus of elasticity in the cured state of ≥ 500 MPa is selected from a group consisting of thermoplastic polyurethane (TPU), polycarbonate (PC), polyamide (PA), polyethylene terephthalate (PET), polybutylene terephthalate (PBT), cycloolefinic copolyester (COC), polyetheretherketone (PEEK), polyetheramideketone (PEAK), polyetherimide (PEI), polyimide (PI), polypropylene (PP) and polyethylene (PE), acrylonitrile-butadiene-styrene (ABS), polylactate (PLA), polymethyl methacrylate (PMMA), polystyrene (PS), polyvinyl chloride (PVC), polyoxymethylene (POM), polyacrylonitrile (PAN), polyacrylate, and celluloid preferably selected from a group consisting of TPU, PA, PEI, and PC, particularly preferably from a group selected from TPU and PC.

8. Process according to any of the preceding claims, **characterized in that** the same hardenable polymer or hardenable reactive resin is used in all of the layers.

9. Process according to any of Claims 1 and 3 to 7, **characterized in that** at least one layer comprises another hardenable polymer and hardenable reactive resin.

10. Process according to any of the preceding claims, **characterized in that** a hardenable polymer or hardenable reactive resin with respectively a modulus of elasticity in the cured state of ≥ 500 MPa is used in all of the layers.

11. Process according to any of the preceding Claims 1, 3 to 7 and 9, **characterized in that** a hardenable polymer or hardenable reactive resin with respectively a modulus of elasticity in the cured state of < 500 MPa is used in at least one layer.

12. Process according to Claim 11, **characterized in that** a hardenable polymer or hardenable reactive resin with respectively a modulus of elasticity in the cured state of < 500 MPa is used in the first layer.

13. Process according to Claim 11 or 12, **characterized in that** a hardenable polymer or hardenable reactive resin with respectively a modulus of elasticity in the cured state of < 500 MPa is used in the final layer.

14. Process according to any of the preceding claims, **characterized in that** the three-dimensional object is a cellphone shell, a housing, e.g. of an electrical item, where said item has a 3D profile, packaging or an item of furniture with surface structures, an A, B or C column, a roof module or a dashboard of an automobile, a seat shell, a filter basket, a medical product such as a rigid corset or an orthosis, a protector, a damping element or a lightweight structure with framework structure.

15. Process according to any of Claims 1 to 14, where the first layer is applied to an interlay, for example a textile or a foil, which transfers the surface shape of the flat base plate to the first layer of a process of the invention, and to which the lines of material of the first layer bond, so that this interlay becomes part of the area section and thus also part of the three-dimensional object.

16. Process for the production of a protector designed appropriately for a user, comprising the steps of:
a) determination of the relevant body-region-geometry data of the user;
b) calculation to convert the 3D-body-geometry data for the production of an area section;
c) manufacture of a three-dimensional object in a process as claimed in any of Claims 1 to 13, where step VI) or, respectively, step iv), the three-dimensional shaping, takes place via deep-draw or thermoforming in accordance with the body-region-geometry data of the user from step a).

## Revendications

1. Procédé de fabrication d'un objet tridimensionnel, dont la surface extérieure comprend au moins une section de surface, qui est générée en produisant au moyen d'un procédé de fabrication additif, notamment un procédé de façonnage formant des couches, sur une plaque de base plane (5), tout d'abord une section de surface sous forme bidimensionnelle, comprenant les étapes suivantes :
I) l'application d'au moins un polymère durcissable ou d'une résine réactionnelle durcissable sous forme fluide en tant que bandes de matériau sur une plaque de base plane (5) au moyen d'un procédé de façonnage formant des couches pour la création d'une première couche (6) ;
II) l'application d'une deuxième couche (7) sur la première couche (6), créée au moyen d'un procédé de façonnage formant des couches ;
III) éventuellement l'application de 1 à 198 couches supplémentaires créées selon l'étape II), une nouvelle couche étant à chaque fois appliquée sur la couche précédente respective ;
IV) le durcissement des couches ;
V) le décollement de la section de surface durcie de la plaque de base plane (5) ; et
VI) le formage de la section de surface durcie en un objet tridimensionnel au moyen d'un emboutissage profond ou d'un thermoformage ;
au moins une couche étant créée par application d'au moins un polymère durcissable ou une résine réactionnelle durcissable sous forme fluide en tant que bandes de matériau sur le substrat respectif ayant à chaque fois un module d'élasticité à l'état durci de ≥ 500 MPa selon EN ISO 527-1 dernière édition d'avril 196, version ISO actuelle février 2012.

2. Procédé de fabrication d'un objet tridimensionnel, dont la surface extérieure comprend au moins une section de surface qui est générée en produisant au moyen d'un procédé de fabrication additif, notamment un procédé de façonnage formant des couches, sur une plaque de base plane (5), tout d'abord une section de surface sous forme bidimensionnelle, comprenant les étapes suivantes :
i) l'application d'au moins un polymère durcissable ou d'une résine réactionnelle durcissable ayant à chaque fois un module d'élasticité, module E, à l'état durci de ≥ 500 MPa sous forme fluide en tant que bandes de matériau sur une plaque de base plane (5) au moyen d'un procédé de façonnage formant des couches pour la création d'une couche (6), la couche étant une surface cohérence avec ou sans évidements, p. ex. alvéolaire ;
ii) le durcissement de la couche ;
iii) le décollement de la section de surface durcie de la plaque de base plane (5) ; et
iv) le formage de la section de surface durcie en un objet tridimensionnel au moyen d'un emboutissage profond ou d'un thermoformage.

3. Procédé selon l'une quelconque des revendications 1 ou 2, **caractérisé en ce qu'**un procédé de façonnage formant des couches est choisi indépendamment dans un groupe constitué par une stratification de masse fondue, nommée dépôt de fil fondu (DFF), l'impression jet d'encre et la projection de photopolymère.

4. Procédé selon l'une quelconque des revendications 1 à 3, dans lequel les bandes de matériau sont appliquées sous la forme de gouttes sur la plaque de base plane (5) ou une des couches (6, 7), qui se trouvent éventuellement déjà sur la plaque de base (5).

5. Procédé selon l'une quelconque des revendications précédentes, **caractérisé en ce que** la température de sortie des mélanges de matières de la buse dans les étapes I) à III) se situe dans la plage allant de 80 °C à 420 °C.

6. Procédé selon l'une quelconque des revendications précédentes, **caractérisé en ce que** la plaque de base est chauffée et la température de chauffage de la plaque de base se situe dans une plage allant de 20 °C à 250 °C.

7. Procédé selon l'une quelconque des revendications précédentes, **caractérisé en ce qu'**un polymère durcissable ou une résine réactionnelle durcissable ayant à chaque fois un module d'élasticité, nommé module E, à l'état durci de ≥ 500 MPa, est choisi dans un groupe constitué par le polyuréthane thermoplastique (TPU), le polycarbonate (PC), le polyamide (PA), le polyéthylène téréphtalate (PET), le polybutylène téréphtalate (PBT), les copolyesters cyclooléfiniques (COC), la polyéther-éther-cétone (PEEK), la polyéther-amide-cétone (PEAK), le polyéther-imide (PEI), le polyimide (PI), le polypropylène (PP) ou le polyéthylène (PE), l'acrylonitrile-butadiène-styrène (ABS), le polylactate (PLA), le polyméthacrylate de méthyle (PMMA), le polystyrène (PS), le polychlorure de vinyle (PVC), le polyoxyméthylène (POM), le polyacrylonitrile (PAN), le polyacrylate, un celluloïde de préférence choisi dans un groupe constitué par le TPU, le PA, le PEI, et le PC, de manière particulièrement préférée dans un groupe constitué par le TPU et le PC.

8. Procédé selon l'une quelconque des revendications précédentes, **caractérisé en ce que** le même polymère durcissable ou la même résine réactionnelle durcissable est utilisé dans toutes les couches.

9. Procédé selon l'une quelconque des revendications 1 ou 3 à 7, **caractérisé en ce qu'**au moins une couche comprend un autre polymère durcissable ou une autre résine réactionnelle durcissable.

10. Procédé selon l'une quelconque des revendications précédentes, **caractérisé en ce qu'**un polymère durcissable ou une résine réactionnelle durcissable ayant à chaque fois un module E à l'état durci de ≥ 500 MPa est utilisé dans toutes les couches.

11. Procédé selon l'une quelconque des revendications 1, 3 à 7 ou 9 précédentes, **caractérisé en ce qu'**un polymère durcissable ou une résine réactionnelle durcissable ayant à chaque fois un module E à l'état durci de < 500 MPa est utilisé dans au moins une couche.

12. Procédé selon la revendication 11, **caractérisé en ce qu'**un polymère durcissable ou une résine réactionnelle durcissable ayant à chaque fois un module E à l'état durci de < 500 MPa est utilisé dans la première couche.

13. Procédé selon la revendication 11 ou 12, **caractérisé en ce qu'**un polymère durcissable ou une résine réactionnelle durcissable ayant à chaque fois un module E à l'état durci de < 500 MPa est utilisé dans la dernière couche.

14. Procédé selon l'une quelconque des revendications précédentes, **caractérisé en ce que** l'objet tridimensionnel est une coque de téléphone portable, un boîtier, p. ex. d'un article électrique, qui présente un relief en 3D, un emballage ou une pièce de meuble ayant des structures de surface, une colonne A, B ou C, un module de toit ou un tableau de bord d'une automobile, une coque d'assise, un panier filtre, un produit médical tel qu'un corset rigide ou une orthèse, un protecteur, un élément d'amortissement ou une structure de construction légère à structure de squelette.

15. Procédé selon l'une quelconque des revendications 1 à 14, dans lequel la première couche est appliquée sur une couche intermédiaire telle qu'un textile ou un film, qui transmet la forme plate de la plaque de base plane à la première couche d'un procédé selon l'invention et avec laquelle les bandes de matériau de la première couche se lient, de telle sorte que cette couche intermédiaire fasse partie de la section de surface et fasse par conséquent également partie de l'objet tridimensionnel.

16. Procédé de fabrication d'un protecteur adapté à un utilisateur comprenant les étapes suivantes :
a) la détermination des données de géométrie de région corporelle pertinentes de l'utilisateur ;
b) la conversion des données de géométrie corporelle 3D pour la création d'une section de surface ;
c) la fabrication d'un objet tridimensionnel par un procédé selon l'une quelconque des revendications 1 à 13, l'étape VI) ou l'étape iv) le façonnage tridimensionnel par emboutissage profond ou thermoformage ayant lieu selon les données de géométrie de région corporelle de l'utilisateur de l'étape a).
